# EUROPEAN PATENT APPLICATION

(11) **EP 4 780 131 A1**
(43) Date of publication of application: **22.07.2026**
(21) Application number: 24881253.9
(22) Date of filing: 29.08.2024
(51) Int. Cl.: H04W 76/14, H04W 48/08, H04B 7/06

(54) **MILLIMETER WAVE LINK ESTABLISHMENT METHOD AND APPARATUS**

(30) Priority: 23.10.2023 CN 202311381510
(71) Applicant: HUAWEI TECHNOLOGIES CO., LTD., Shenzhen 518129 (CN)
(72) Inventor: ZHI, Meipeng, Shenzhen, Guangdong 518129 (CN); HE, Chao, Shenzhen, Guangdong 518129 (CN)
(74) Representative: Pfenning, Meinig & Partner mbB
(86) International application number: PCT/CN2024/115590
(87) International publication number: WO 2025/086885

(57) **Abstract**

This application provides a millimeter wave link establishment method and an apparatus, applied to the field of wireless communication technologies. The millimeter wave link establishment method is applied to an AP. The method may include: The AP and a STA establish a sub-6G link. Then, the AP receives a millimeter wave association request from the STA via the sub-6G link, where the millimeter wave association request is used to request to establish a millimeter wave link in a first direction. In addition, the AP sends a millimeter wave association response to the STA via the sub-6G link, where the millimeter wave association response indicates to determine to establish the millimeter wave link in the first direction. Further, the AP and the STA establish the millimeter wave link in the first direction. Based on this solution, the AP and the STA may transmit, by using the established sub-6G link, an interaction message used to establish a millimeter wave link. A Sub-6GHz signal has a better anti-interference capability than a millimeter wave signal. Therefore, a success rate of transmitting the interaction message used to establish the millimeter wave link is higher, and a success rate of establishing the millimeter wave link can be greatly improved.

## Description

This application claims priority to Chinese Patent Application No. 202311381510.3, filed with the China National Intellectual Property Administration on October 23, 2023, and entitled "MILLIMETER WAVE LINK ESTABLISHMENT METHOD AND APPARATUS", which is incorporated herein by reference in its entirety.

### TECHNICAL FIELD

This application relates to the field of wireless communication technologies, and in particular, to a millimeter wave link establishment method and an apparatus.

### BACKGROUND

A millimeter wave (mmWave) technology is an important technology in a 5th generation (5th generation, 5G) mobile communication standard, has advantages of a large bandwidth and a low latency, and can better meet increasing network requirements of users.

However, a millimeter wave signal has poor penetrability, and is easily blocked by an obstacle. The millimeter wave communication is susceptible to interference from an obstacle around a millimeter wave communication device. When a millimeter wave is used to establish a link between a user station (station, STA) and an access point (access point, AP), if there is an obstacle in an environment, a millimeter wave signal for link establishment and interaction is likely to fail to be transmitted. As a result, a success rate of establishing a millimeter wave link is low.

### SUMMARY

This application provides a millimeter wave link establishment method and an apparatus, to resolve a problem that a millimeter wave signal is susceptible to interference and a success rate of establishing a millimeter wave link is low.

According to a first aspect, a millimeter wave link establishment method is provided. The method may be performed by an AP, or may be performed by a component of the AP, such as a processor, a chip, or a chip system of the AP, or may be implemented by a logical module or software that can implement all or some functions of the AP. The method may include: The AP and a STA establish a sub-6G link. Then, the AP receives a millimeter wave association request from the STA via the sub-6G link, where the millimeter wave association request is used to request to establish a millimeter wave link in a first direction. In addition, the AP sends a millimeter wave association response to the STA via the sub-6G link, where the millimeter wave association response indicates to determine to establish the millimeter wave link in the first direction. Further, the AP and the STA establish the millimeter wave link in the first direction.

Based on this solution, the AP and the STA transmit, by using the established sub-6G link, an interaction message used to establish a millimeter wave link (for example, the millimeter wave association request and the millimeter wave association response). A Sub-6GHz signal has a better anti-interference capability than a millimeter wave signal. Therefore, a success rate of transmitting the interaction message used to establish the millimeter wave link is higher, and a success rate of establishing the millimeter wave link can be greatly improved. This method can overcome a problem in a conventional manner where exchange of link establishment information by using a millimeter wave signal is highly susceptible to environmental interference, which leads to a millimeter wave link establishment failure. In addition, in comparison with a solution in which a millimeter wave link in an uplink direction and a millimeter wave link in a downlink direction are established together and take effect in a current standard, an uplink millimeter wave link and a downlink millimeter wave link may be separately established in embodiments of this application, so that the separate establishment of the uplink millimeter wave link and the downlink millimeter wave link may be decoupled, which is more flexible.

With reference to the first aspect, in a possible implementation, a millimeter wave capabilities field of the millimeter wave association request carries capability information about whether the STA supports separate establishment of the millimeter wave link in the first direction, and a millimeter wave capabilities field of the millimeter wave association response carries capability information about whether the AP supports separate establishment of the millimeter wave link in the first direction. That the AP and the STA establish the millimeter wave link in the first direction may specifically include: The AP and the STA establish the millimeter wave link in the first direction when the millimeter wave capabilities field of the millimeter wave association request indicates that the STA supports separate establishment of the millimeter wave link in the first direction, and the millimeter wave capabilities field of the millimeter wave association response indicates that the AP supports separate establishment of the millimeter wave link in the first direction.

With reference to the first aspect, in a possible implementation, the millimeter wave link in the first direction is an uplink millimeter wave link or a downlink millimeter wave link.

With reference to the first aspect, in a possible implementation, when the millimeter wave link in the first direction is an uplink millimeter wave link, the method further includes: The AP receives an uplink data frame from the STA via the uplink millimeter wave link, and the AP sends a downlink data frame to the STA via the sub-6G link.

With reference to the first aspect, in a possible implementation, when the millimeter wave link in the first direction is a downlink millimeter wave link, the method further includes: the AP sends a downlink data frame to the STA via the downlink millimeter wave link, and the AP receives an uplink data frame from the STA via the sub-6G link.

With reference to the first aspect, in a possible implementation, the method may further include: The AP and the STA transmit a data frame via the millimeter wave link in the first direction, where the data frame includes a first identifier, and the first identifier indicates that an acknowledgment ACK frame corresponding to the data frame is transmitted via the sub-6G link. In addition, the AP and the STA transmit the ACK frame corresponding to the data frame via the sub-6G link, where the ACK frame includes a second identifier, and the second identifier indicates that the data frame corresponding to the ACK frame is transmitted via the millimeter wave link in the first direction.

With reference to the first aspect, in a possible implementation, a millimeter wave option field of the millimeter wave association response carries a first millimeter wave channel, and the first millimeter wave channel is selected by the AP. That the millimeter wave association response indicates to determine to establish the millimeter wave link in the first direction may specifically include: the millimeter wave association response indicates to determine to establish the millimeter wave link in the first direction by using the first millimeter wave channel.

With reference to the first aspect, in a possible implementation, the millimeter wave link in the first direction is a downlink millimeter wave link. The method may further include: The AP sends a channel scan frame to the STA on a plurality of millimeter wave channels, where the channel scan frame is used to determine channel quality of the plurality of millimeter wave channels, and the plurality of millimeter wave channels include the first millimeter wave channel. Then, the AP receives a channel scan feedback frame from the STA via the sub-6G link, where the channel scan feedback frame indicates the channel quality of the plurality of millimeter wave channels. Then, the AP determines, based on the channel quality of the plurality of millimeter wave channels, to switch a channel of the millimeter wave link in the first direction to the second millimeter wave channel, where channel quality of the second millimeter wave channel is better than that of the first millimeter wave channel. Further, the AP sends a channel switching frame to the STA via the sub-6G link, where the channel switching frame indicates the STA to switch the channel of the millimeter wave link in the first direction to the second millimeter wave channel.

With reference to the first aspect, in a possible implementation, the millimeter wave link in the first direction is a downlink millimeter wave link. The method may further include: The AP sends a channel scan frame to the STA on a plurality of millimeter wave channels, where the channel scan frame is used to determine quality of the plurality of millimeter wave channels, and the plurality of millimeter wave channels include the first millimeter wave channel. Then, the AP receives a channel scan feedback frame from the STA via the sub-6G link, where the channel scan feedback frame indicates that channel quality of a second millimeter wave channel of the plurality of millimeter wave channels is better than that of the first millimeter wave channel. Then, the AP determines, based on the channel scan feedback frame, to switch a channel of the millimeter wave link in the first direction to the second millimeter wave channel. Further, the AP sends a channel switching frame to the STA via the sub-6G link, where the channel switching frame indicates the STA to switch the channel of the millimeter wave link in the first direction to the second millimeter wave channel.

With reference to the first aspect, in a possible implementation, the millimeter wave link in the first direction is an uplink millimeter wave link. The method may further include: The AP receives a channel scan frame from the STA on a plurality of millimeter wave channels, where the channel scan frame is used to determine quality of the plurality of millimeter wave channels, and the plurality of millimeter wave channels include the first millimeter wave channel. Then, the AP determines channel quality of the plurality of millimeter wave channels based on receiving statuses of the channel scan frame on the plurality of millimeter wave channels. Then, the AP sends a channel scan feedback frame to the STA via the sub-6G link, where the channel scan feedback frame indicates the quality of the plurality of millimeter wave channels. Further, the AP receives a channel switching frame from the STA via the sub-6G link, where the channel switching frame indicates the AP to switch a channel of the millimeter wave link in the first direction to a second millimeter wave channel, and channel quality of the second millimeter wave channel is better than that of the first millimeter wave channel.

With reference to the first aspect, in a possible implementation, the millimeter wave link in the first direction is an uplink millimeter wave link. The method may further include: The AP receives a channel scan frame from the STA on a plurality of millimeter wave channels, where the channel scan frame is used to determine quality of the plurality of millimeter wave channels, and the plurality of millimeter wave channels include the first millimeter wave channel. Then, the AP determines channel quality of the plurality of millimeter wave channels based on receiving statuses of the channel scan frame on the plurality of millimeter wave channels. Then, the AP sends a channel scan feedback frame to the STA via the sub-6G link, where the channel scan feedback frame indicates that channel quality of a second millimeter wave channel of the plurality of millimeter wave channels is better than that of the first millimeter wave channel. Further, the AP receives a channel switching frame from the STA via the sub-6G link, where the channel switching frame indicates the AP to switch the channel of the millimeter wave link in the first direction to the second millimeter wave channel.

With reference to the first aspect, in a possible implementation, the method may further include: The AP sends a beam alignment request frame to the STA via the sub-6G link. In addition, the AP receives a beam alignment response frame from the STA via the sub-6G link. Then, the AP separately sends sector scan frames to the STA on a plurality of transmit sectors, where the sector scan frames are transmitted via the millimeter wave link in the first direction. Then, the AP receives a sector scan feedback frame from the STA via the sub-6G link, where the sector scan feedback frame indicates sector quality of the plurality of transmit sectors. Further, the AP determines an optimal transmit sector of the plurality of transmit sectors based on the sector quality of the plurality of transmit sectors.

With reference to the first aspect, in a possible implementation, the method may further include: The AP sends a beam alignment request frame to the STA via the sub-6G link. In addition, the AP receives a beam alignment response frame from the STA via the sub-6G link. Then, the AP separately sends sector scan frames to the STA on the plurality of transmit sectors, where the sector scan frames are transmitted via the millimeter wave link in the first direction. Then, the AP receives a sector scan feedback frame from the STA via the sub-6G link, where the sector scan feedback frame indicates an optimal transmit sector of the plurality of transmit sectors.

With reference to the first aspect, in a possible implementation, the method may further include: The AP receives a beam alignment request frame from the STA via the sub-6G link. In addition, the AP sends a beam alignment response frame to the STA via the sub-6G link. Then, the AP separately receives, on the plurality of receive sectors, sector scan frames sent by the STA from a same transmit sector, where the sector scan frames are transmitted via the millimeter wave link in the first direction. Then, the AP determines an optimal receive sector of the plurality of receive sectors based on receiving statuses of receiving the sector scan frames on the plurality of receive sectors.

According to a second aspect, a millimeter wave link establishment method is provided. The method may be performed by a STA, or may be performed by a component of the STA, such as a processor, a chip, or a chip system of the STA, or may be implemented by a logical module or software that can implement all or some functions of the STA. The method may include: The STA establishes a sub-6G link with an AP. Then, the STA sends a millimeter wave association request to the AP via the sub-6G link, where the millimeter wave association request is used to request to establish a millimeter wave link in a first direction. Then, the STA receives, via the sub-6G link, a millimeter wave association response sent by the STA, where the millimeter wave association response indicates to determine to establish the millimeter wave link in the first direction. Further, the STA and the AP establish the millimeter wave link in the first direction.

With reference to the second aspect, in a possible implementation, a millimeter wave capabilities field of the millimeter wave association request carries capability information about whether the STA supports separate establishment of the millimeter wave link in the first direction, and a millimeter wave capabilities field of the millimeter wave association response carries capability information about whether the AP supports separate establishment of the millimeter wave link in the first direction. That the AP and the STA establish the millimeter wave link in the first direction may specifically include: The AP and the STA establish the millimeter wave link in the first direction when the millimeter wave capabilities field of the millimeter wave association request indicates that the STA supports separate establishment of the millimeter wave link in the first direction, and the millimeter wave capabilities field of the millimeter wave association response indicates that the AP supports separate establishment of the millimeter wave link in the first direction.

With reference to the second aspect, in a possible implementation, the millimeter wave link in the first direction is an uplink millimeter wave link or a downlink millimeter wave link.

With reference to the second aspect, in a possible implementation, when the millimeter wave link in the first direction is an uplink millimeter wave link, the method may further include: The STA sends an uplink data frame to the AP via the uplink millimeter wave link, and the STA receives a downlink data frame from the AP via the sub-6G link.

With reference to the second aspect, in a possible implementation, when the millimeter wave link in the first direction is a downlink millimeter wave link, the method may further include: The STA receives a downlink data frame from the AP via the downlink millimeter wave link, and the STA sends an uplink data frame to the AP via the sub-6G link.

With reference to the second aspect, in a possible implementation, the method may further include: The STA and the AP transmit a data frame via the millimeter wave link in the first direction, where the data frame includes a first identifier, and the first identifier indicates that an acknowledgment ACK frame corresponding to the data frame is transmitted via the sub-6G link. In addition, the STA and the AP transmit the ACK frame corresponding to the data frame via the sub-6G link, where the ACK frame includes a second identifier, and the second identifier indicates that the data frame corresponding to the ACK frame is transmitted via the millimeter wave link in the first direction.

With reference to the second aspect, in a possible implementation, a millimeter wave option field of the millimeter wave association response carries a first millimeter wave channel, and the first millimeter wave channel is selected by the AP. That the millimeter wave association response indicates to determine to establish the millimeter wave link in the first direction may specifically include: the millimeter wave association response indicates to determine to establish the millimeter wave link in the first direction by using the first millimeter wave channel.

With reference to the second aspect, in a possible implementation, the millimeter wave link in the first direction is a downlink millimeter wave link. The method may further include: The STA receives a channel scan frame from the AP on a plurality of millimeter wave channels, where the channel scan frame is used to determine channel quality of the plurality of millimeter wave channels, and the plurality of millimeter wave channels include the first millimeter wave channel. Then, the STA determines channel quality of the plurality of millimeter wave channels based on receiving statuses of the channel scan frame on the plurality of millimeter wave channels. Then, the STA sends a channel scan feedback frame to the AP via the sub-6G link, where the channel scan feedback frame indicates the channel quality of the plurality of millimeter wave channels. Further, the STA receives a channel switching frame from the AP via the sub-6G link, where the channel switching frame indicates the STA to switch the channel of the millimeter wave link in the first direction to the second millimeter wave channel.

With reference to the second aspect, in a possible implementation, the millimeter wave link in the first direction is a downlink millimeter wave link. The method may further include: The STA receives a channel scan frame from the AP on a plurality of millimeter wave channels, where the channel scan frame is used to determine quality of the plurality of millimeter wave channels, and the plurality of millimeter wave channels include the first millimeter wave channel. Then, the STA determines channel quality of the plurality of millimeter wave channels based on receiving statuses of the channel scan frame on the plurality of millimeter wave channels. Then, the STA sends a channel scan feedback frame to the AP via the sub-6G link, where the channel scan feedback frame indicates that channel quality of a second millimeter wave channel of the plurality of millimeter wave channels is better than that of the first millimeter wave channel. Further, the STA receives a channel switching frame from the AP via the sub-6G link, where the channel switching frame indicates the STA to switch the channel of the millimeter wave link in the first direction to the second millimeter wave channel.

With reference to the second aspect, in a possible implementation, the millimeter wave link in the first direction is an uplink millimeter wave link. The method may further include: The STA sends a channel scan frame to the AP on a plurality of millimeter wave channels, where the channel scan frame is used to determine quality of the plurality of millimeter wave channels, and the plurality of millimeter wave channels include the first millimeter wave channel. Then, the STA receives a channel scan feedback frame from the AP via the sub-6G link, where the channel scan feedback frame indicates the quality of the plurality of millimeter wave channels. Then, the STA determines, based on the quality of the plurality of millimeter wave channels, to switch a channel of the millimeter wave link in the first direction to a second millimeter wave channel. Further, the STA sends a channel switching frame to the AP via the sub-6G link, where the channel switching frame indicates the AP to switch the channel of the millimeter wave link in the first direction to the second millimeter wave channel. Channel quality of the second millimeter wave channel is better than that of the first millimeter wave channel.

With reference to the second aspect, in a possible implementation, the millimeter wave link in the first direction is an uplink millimeter wave link. The method may further include: The STA sends a channel scan frame to the AP on a plurality of millimeter wave channels, where the channel scan frame is used to determine quality of the plurality of millimeter wave channels, and the plurality of millimeter wave channels include the first millimeter wave channel. Then, the STA receives a channel scan feedback frame from the AP via the sub-6G link, where the channel scan feedback frame indicates that channel quality of a second millimeter wave channel of the plurality of millimeter wave channels is better than that of the first millimeter wave channel. Then, the STA determines, based on the channel scan feedback frame, to switch a channel of the millimeter wave link in the first direction to the second millimeter wave channel. Further, the STA sends a channel switching frame to the AP via the sub-6G link, where the channel switching frame indicates the AP to switch the channel of the millimeter wave link in the first direction to the second millimeter wave channel.

With reference to the second aspect, in a possible implementation, the method may further include: The STA sends a beam alignment request frame to the AP via the sub-6G link. Then, the STA receives a beam alignment response frame from the AP via the sub-6G link. Then, the STA separately sends sector scan frames to the AP on the plurality of transmit sectors, where the sector scan frames are transmitted via the millimeter wave link in the first direction. Further, the STA receives a sector scan feedback frame from the AP via the sub-6G link, where the sector scan feedback frame indicates sector quality of the plurality of transmit sectors. Finally, the STA determines an optimal transmit sector of the plurality of transmit sectors based on the sector quality of the plurality of transmit sectors.

With reference to the second aspect, in a possible implementation, the method may further include: The STA sends a beam alignment request frame to the AP via the sub-6G link. Then, the STA receives a beam alignment response frame from the AP via the sub-6G link. Then, the STA separately sends sector scan frames to the AP on the plurality of transmit sectors, where the sector scan frames are transmitted via the millimeter wave link in the first direction. Further, the STA receives a sector scan feedback frame from the AP via the sub-6G link, where the sector scan feedback frame indicates an optimal transmit sector of the plurality of transmit sectors.

With reference to the second aspect, in a possible implementation, the method may further include: The STA receives a beam alignment request frame from the AP via the sub-6G link. Then, the STA sends a beam alignment response frame to the AP via the sub-6G link. Then, the STA separately receives, on the plurality of receive sectors, sector scan frames sent by the AP from a same transmit sector, where the sector scan frames are transmitted via the millimeter wave link in the first direction. Further, the STA determines an optimal receive sector of the plurality of receive sectors based on receiving statuses of receiving the sector scan frames on the plurality of receive sectors.

According to a third aspect, an embodiment of this application provides a communication apparatus. The communication apparatus may be applied to an AP. The communication apparatus may implement a function performed by the management apparatus in any possible design of the first aspect. The function may be implemented by hardware by executing corresponding software. The hardware or the software includes one or more modules corresponding to the function. The communication apparatus may include a transceiver module, and optionally, may further include a processing module. The transceiver module may be configured to establish a sub-6G link with a STA. The transceiver module may be further configured to receive a millimeter wave association request from the STA via the sub-6G link, where the millimeter wave association request is used to request to establish a millimeter wave link in a first direction. The transceiver module may be further configured to send a millimeter wave association response to the STA via the sub-6G link, where the millimeter wave association response indicates to determine to establish the millimeter wave link in the first direction. The transceiver module may be further configured to establish the millimeter wave link in the first direction with the STA.

With reference to the third aspect, in a possible implementation, a millimeter wave capabilities field of the millimeter wave association request carries capability information about whether the STA supports separate establishment of the millimeter wave link in the first direction, and a millimeter wave capabilities field of the millimeter wave association response carries capability information about whether the AP supports separate establishment of the millimeter wave link in the first direction. The transceiver module may be specifically configured to establish the millimeter wave link in the first direction with the STA when the millimeter wave capabilities field of the millimeter wave association request indicates that the STA supports separate establishment of the millimeter wave link in the first direction, and the millimeter wave capabilities field of the millimeter wave association response indicates that the AP supports separate establishment of the millimeter wave link in the first direction.

With reference to the third aspect, in a possible implementation, the millimeter wave link in the first direction is an uplink millimeter wave link or a downlink millimeter wave link.

With reference to the third aspect, in a possible implementation, when the millimeter wave link in the first direction is an uplink millimeter wave link, the transceiver module may be further configured to: receive an uplink data frame from the STA via the uplink millimeter wave link, and send a downlink data frame to the STA via the sub-6G link.

With reference to the third aspect, in a possible implementation, when the millimeter wave link in the first direction is a downlink millimeter wave link, the transceiver module may be further configured to: send a downlink data frame to the STA via the downlink millimeter wave link, and receive an uplink data frame from the STA via the sub-6G link.

With reference to the third aspect, in a possible implementation, the transceiver module may be further configured to: transmit a data frame via the millimeter wave link in the first direction with the STA, and transmit the ACK frame corresponding to the data frame via the sub-6G link with the STA. The data frame includes a first identifier, and the first identifier indicates that an acknowledgment ACK frame corresponding to the data frame is transmitted via the sub-6G link. The ACK frame includes a second identifier, and the second identifier indicates that the data frame corresponding to the ACK frame is transmitted via the millimeter wave link in the first direction.

With reference to the third aspect, in a possible implementation, a millimeter wave option field of the millimeter wave association response carries a first millimeter wave channel, and the first millimeter wave channel is selected by the AP. That the millimeter wave association response indicates to determine to establish the millimeter wave link in the first direction may specifically include: the millimeter wave association response indicates to determine to establish the millimeter wave link in the first direction by using the first millimeter wave channel.

With reference to the third aspect, in a possible implementation, the millimeter wave link in the first direction is a downlink millimeter wave link. The transceiver module may be further configured to send a channel scan frame to the STA on a plurality of millimeter wave channels, where the channel scan frame is used to determine channel quality of the plurality of millimeter wave channels, and the plurality of millimeter wave channels include the first millimeter wave channel. In addition, the transceiver module may be further configured to receive a channel scan feedback frame from the STA via the sub-6G link, where the channel scan feedback frame indicates the channel quality of the plurality of millimeter wave channels. The processing module may be configured to determine, based on the channel quality of the plurality of millimeter wave channels, to switch a channel of the millimeter wave link in the first direction to the second millimeter wave channel, where channel quality of the second millimeter wave channel is better than that of the first millimeter wave channel. The transceiver module may be further configured to send a channel switching frame to the STA via the sub-6G link, where the channel switching frame indicates the STA to switch the channel of the millimeter wave link in the first direction to the second millimeter wave channel.

With reference to the third aspect, in a possible implementation, the millimeter wave link in the first direction is a downlink millimeter wave link. The transceiver module may be further configured to send a channel scan frame to the STA on a plurality of millimeter wave channels, where the channel scan frame is used to determine quality of the plurality of millimeter wave channels, and the plurality of millimeter wave channels include the first millimeter wave channel. The transceiver module may be further configured to receive a channel scan feedback frame from the STA via the sub-6G link, where the channel scan feedback frame indicates that channel quality of a second millimeter wave channel of the plurality of millimeter wave channels is better than that of the first millimeter wave channel. The processing module may be configured to determine, based on the channel scan feedback frame, to switch a channel of the millimeter wave link in the first direction to the second millimeter wave channel. The transceiver module may be further configured to send a channel switching frame to the STA via the sub-6G link, where the channel switching frame indicates the STA to switch the channel of the millimeter wave link in the first direction to the second millimeter wave channel.

With reference to the third aspect, in a possible implementation, the millimeter wave link in the first direction is an uplink millimeter wave link. The transceiver module may be further configured to receive a channel scan frame from the STA on a plurality of millimeter wave channels, where the channel scan frame is used to determine quality of the plurality of millimeter wave channels, and the plurality of millimeter wave channels include the first millimeter wave channel. The processing module may be configured to determine channel quality of the plurality of millimeter wave channels based on receiving statuses of the channel scan frame on the plurality of millimeter wave channels. The transceiver module may be further configured to send a channel scan feedback frame to the STA via the sub-6G link, where the channel scan feedback frame indicates the quality of the plurality of millimeter wave channels. The transceiver module may be further configured to receive a channel switching frame from the STA via the sub-6G link, where the channel switching frame indicates the AP to switch a channel of the millimeter wave link in the first direction to a second millimeter wave channel, and channel quality of the second millimeter wave channel is better than that of the first millimeter wave channel.

With reference to the third aspect, in a possible implementation, the millimeter wave link in the first direction is an uplink millimeter wave link. The transceiver module may be further configured to receive a channel scan frame from the STA on a plurality of millimeter wave channels, where the channel scan frame is used to determine quality of the plurality of millimeter wave channels, and the plurality of millimeter wave channels include the first millimeter wave channel. The processing module may be configured to determine channel quality of the plurality of millimeter wave channels based on receiving statuses of the channel scan frame on the plurality of millimeter wave channels. The transceiver module may be further configured to send a channel scan feedback frame to the STA via the sub-6G link, where the channel scan feedback frame indicates that channel quality of a second millimeter wave channel of the plurality of millimeter wave channels is better than that of the first millimeter wave channel. The transceiver module may be further configured to receive a channel switching frame from the STA via the sub-6G link, where the channel switching frame indicates the AP to switch the channel of the millimeter wave link in the first direction to the second millimeter wave channel.

With reference to the third aspect, in a possible implementation, the transceiver module may be further configured to send a beam alignment request frame to the STA via the sub-6G link. The transceiver module may be further configured to receive a beam alignment response frame from the STA via the sub-6G link. The transceiver module may be further configured to separately send sector scan frames to the STA on the plurality of transmit sectors, where the sector scan frames are transmitted via the millimeter wave link in the first direction. The transceiver module may be further configured to receive a sector scan feedback frame from the STA via the sub-6G link, where the sector scan feedback frame indicates sector quality of the plurality of transmit sectors. The processing module may be configured to determine an optimal transmit sector of the plurality of transmit sectors based on the sector quality of the plurality of transmit sectors.

With reference to the third aspect, in a possible implementation, the transceiver module may be further configured to send a beam alignment request frame to the STA via the sub-6G link. The transceiver module may be further configured to receive a beam alignment response frame from the STA via the sub-6G link. The transceiver module may be further configured to separately send sector scan frames to the STA on the plurality of transmit sectors, where the sector scan frames are transmitted via the millimeter wave link in the first direction. The transceiver module may be further configured to receive a sector scan feedback frame from the STA via the sub-6G link, where the sector scan feedback frame indicates an optimal transmit sector of the plurality of transmit sectors.

With reference to the third aspect, in a possible implementation, the transceiver module may be further configured to receive a beam alignment request frame from the STA via the sub-6G link. The transceiver module may be further configured to send a beam alignment response frame to the STA via the sub-6G link. The transceiver module may be further configured to separately receive, on the plurality of receive sectors, sector scan frames sent by the STA from a same transmit sector, where the sector scan frames are transmitted via the millimeter wave link in the first direction. The processing module may be configured to determine an optimal receive sector of the plurality of receive sectors based on receiving statuses of receiving the sector scan frames on the plurality of receive sectors.

According to a fourth aspect, an embodiment of this application provides a communication apparatus. The communication apparatus may be applied to a STA. The communication apparatus may implement a function performed by the management apparatus in any possible design of the second aspect. The function may be implemented by hardware by executing corresponding software. The hardware or the software includes one or more modules corresponding to the function. The communication apparatus may include a transceiver module, and optionally, may further include a processing module. The transceiver module may be configured to establish a sub-6G link with an AP. The transceiver module may be further configured to send a millimeter wave association request to the AP via the sub-6G link, where the millimeter wave association request is used to request to establish a millimeter wave link in a first direction. The transceiver module may be further configured to receive, via the sub-6G link, a millimeter wave association response sent by the STA, where the millimeter wave association response indicates to determine to establish the millimeter wave link in the first direction. The transceiver module may be further configured to establish the millimeter wave link in the first direction with the AP.

With reference to the fourth aspect, in a possible implementation, a millimeter wave capabilities field of the millimeter wave association request carries capability information about whether the STA supports separate establishment of the millimeter wave link in the first direction, and a millimeter wave capabilities field of the millimeter wave association response carries capability information about whether the AP supports separate establishment of the millimeter wave link in the first direction. The transceiver module may be specifically configured to establish the millimeter wave link in the first direction with the AP when the millimeter wave capabilities field of the millimeter wave association request indicates that the STA supports separate establishment of the millimeter wave link in the first direction, and the millimeter wave capabilities field of the millimeter wave association response indicates that the AP supports separate establishment of the millimeter wave link in the first direction.

With reference to the fourth aspect, in a possible implementation, the millimeter wave link in the first direction is an uplink millimeter wave link or a downlink millimeter wave link.

With reference to the fourth aspect, in a possible implementation, when the millimeter wave link in the first direction is an uplink millimeter wave link, the transceiver module may be further configured to: send an uplink data frame to the AP via the uplink millimeter wave link, and receive a downlink data frame from the AP via the sub-6G link.

With reference to the fourth aspect, in a possible implementation, when the millimeter wave link in the first direction is a downlink millimeter wave link, the transceiver module may be further configured to: receive a downlink data frame from the AP via the downlink millimeter wave link, and send an uplink data frame to the AP via the sub-6G link.

With reference to the fourth aspect, in a possible implementation, the transceiver module may be further configured to: transmit a data frame via the millimeter wave link in the first direction with the AP, and transmit the ACK frame corresponding to the data frame via the sub-6G link with the AP. The data frame includes a first identifier, and the first identifier indicates that an acknowledgment ACK frame corresponding to the data frame is transmitted via the sub-6G link. The ACK frame includes a second identifier, and the second identifier indicates that the data frame corresponding to the ACK frame is transmitted via the millimeter wave link in the first direction.

With reference to the fourth aspect, in a possible implementation, a millimeter wave option field of the millimeter wave association response carries a first millimeter wave channel, and the first millimeter wave channel is selected by the AP. That the millimeter wave association response indicates to determine to establish the millimeter wave link in the first direction may specifically include: the millimeter wave association response indicates to determine to establish the millimeter wave link in the first direction by using the first millimeter wave channel.

With reference to the fourth aspect, in a possible implementation, the millimeter wave link in the first direction is a downlink millimeter wave link. The transceiver module may be further configured to receive a channel scan frame from the AP on a plurality of millimeter wave channels, where the channel scan frame is used to determine channel quality of the plurality of millimeter wave channels, and the plurality of millimeter wave channels include the first millimeter wave channel. The processing module may be configured to determine channel quality of the plurality of millimeter wave channels based on receiving statuses of the channel scan frame on the plurality of millimeter wave channels. The transceiver module may be further configured to send a channel scan feedback frame to the AP via the sub-6G link, where the channel scan feedback frame indicates the channel quality of the plurality of millimeter wave channels. The transceiver module may be further configured to receive a channel switching frame from the AP via the sub-6G link, where the channel switching frame indicates the STA to switch the channel of the millimeter wave link in the first direction to the second millimeter wave channel.

With reference to the fourth aspect, in a possible implementation, the millimeter wave link in the first direction is a downlink millimeter wave link. The transceiver module may be further configured to receive a channel scan frame from the AP on a plurality of millimeter wave channels, where the channel scan frame is used to determine quality of the plurality of millimeter wave channels, and the plurality of millimeter wave channels include the first millimeter wave channel. The processing module may be configured to determine channel quality of the plurality of millimeter wave channels based on receiving statuses of the channel scan frame on the plurality of millimeter wave channels. The transceiver module may be further configured to send a channel scan feedback frame to the AP via the sub-6G link, where the channel scan feedback frame indicates that channel quality of a second millimeter wave channel of the plurality of millimeter wave channels is better than that of the first millimeter wave channel. The transceiver module may be further configured to receive a channel switching frame from the AP via the sub-6G link, where the channel switching frame indicates the STA to switch the channel of the millimeter wave link in the first direction to the second millimeter wave channel.

With reference to the fourth aspect, in a possible implementation, the millimeter wave link in the first direction is an uplink millimeter wave link. The transceiver module may be further configured to send a channel scan frame to the AP on a plurality of millimeter wave channels, where the channel scan frame is used to determine quality of the plurality of millimeter wave channels, and the plurality of millimeter wave channels include the first millimeter wave channel. The transceiver module may be further configured to receive a channel scan feedback frame from the AP via the sub-6G link, where the channel scan feedback frame indicates the quality of the plurality of millimeter wave channels. The processing module may be configured to determine, based on the quality of the plurality of millimeter wave channels, to switch a channel of the millimeter wave link in the first direction to a second millimeter wave channel. The transceiver module may be further configured to send a channel switching frame to the AP via the sub-6G link, where the channel switching frame indicates the AP to switch the channel of the millimeter wave link in the first direction to the second millimeter wave channel. Channel quality of the second millimeter wave channel is better than that of the first millimeter wave channel.

With reference to the fourth aspect, in a possible implementation, the millimeter wave link in the first direction is an uplink millimeter wave link. The transceiver module may be further configured to send a channel scan frame to the AP on a plurality of millimeter wave channels, where the channel scan frame is used to determine quality of the plurality of millimeter wave channels, and the plurality of millimeter wave channels include the first millimeter wave channel. The transceiver module may be further configured to receive a channel scan feedback frame from the AP via the sub-6G link, where the channel scan feedback frame indicates that channel quality of a second millimeter wave channel of the plurality of millimeter wave channels is better than that of the first millimeter wave channel. The processing module may be configured to determine, based on the channel scan feedback frame, to switch a channel of the millimeter wave link in the first direction to the second millimeter wave channel. The transceiver module may be further configured to send a channel switching frame to the AP via the sub-6G link, where the channel switching frame indicates the AP to switch the channel of the millimeter wave link in the first direction to the second millimeter wave channel.

With reference to the fourth aspect, in a possible implementation, the transceiver module may be further configured to send a beam alignment request frame to the AP via the sub-6G link. The transceiver module may be further configured to receive a beam alignment response frame from the AP via the sub-6G link. The transceiver module may be further configured to separately send sector scan frames to the AP on the plurality of transmit sectors, where the sector scan frames are transmitted via the millimeter wave link in the first direction. The transceiver module may be further configured to receive a sector scan feedback frame from the AP via the sub-6G link, where the sector scan feedback frame indicates sector quality of the plurality of transmit sectors. The processing module may be configured to determine an optimal transmit sector of the plurality of transmit sectors based on the sector quality of the plurality of transmit sectors.

With reference to the fourth aspect, in a possible implementation, the transceiver module may be further configured to send a beam alignment request frame to the AP via the sub-6G link. The transceiver module may be further configured to receive a beam alignment response frame from the AP via the sub-6G link. The transceiver module may be further configured to separately send sector scan frames to the AP on the plurality of transmit sectors, where the sector scan frames are transmitted via the millimeter wave link in the first direction. The transceiver module may be further configured to receive a sector scan feedback frame from the AP via the sub-6G link, where the sector scan feedback frame indicates an optimal transmit sector of the plurality of transmit sectors.

With reference to the fourth aspect, in a possible implementation, the transceiver module may be further configured to receive a beam alignment request frame from the AP via the sub-6G link. The transceiver module may be further configured to send a beam alignment response frame to the AP via the sub-6G link. The transceiver module may be further configured to separately receive, on the plurality of receive sectors, sector scan frames sent by the AP from a same transmit sector, where the sector scan frames are transmitted via the millimeter wave link in the first direction. The processing module may be configured to determine an optimal receive sector of the plurality of receive sectors based on receiving statuses of receiving the sector scan frames on the plurality of receive sectors.

According to a fifth aspect, a communication apparatus is provided, and includes: a processor and a memory. The memory is configured to store computer instructions. When the apparatus runs, the processor executes the computer instructions stored in the memory, to enable the apparatus to perform the millimeter wave link establishment method according to any one of the first aspect or the second aspect.

With reference to the fifth aspect, in a possible implementation, the apparatus further includes a communication interface. The communication interface is used by the apparatus to communicate with another device. For example, the communication interface may be a transceiver, an input/output interface, an interface circuit, an output circuit, an input circuit, a pin, or a related circuit.

According to a sixth aspect, a computer-readable storage medium is provided. The computer-readable storage medium stores instructions. When the instructions are run on a computer, the computer is enabled to perform the millimeter wave link establishment method according to any one of the first aspect or the second aspect.

According to a seventh aspect, a computer program product including instructions is provided. When the computer program product is run on a computer, the computer is enabled to perform the millimeter wave link establishment method according to any one of the first aspect or the second aspect.

For technical effects of any design of the second aspect to the seventh aspect, refer to the technical effects of different designs of the first aspect, and details are not described herein again.

### BRIEF DESCRIPTION OF DRAWINGS

FIG. 1 is a diagram of a communication system according to an embodiment of this application;
FIG. 2 is a schematic flowchart of a millimeter wave link establishment method according to an embodiment of this application;
FIG. 3 is a diagram of a frame format of a millimeter wave association request according to an embodiment of this application;
FIG. 4 is a diagram of a frame format of a millimeter wave association response according to an embodiment of this application;
FIG. 5 is a schematic flowchart of another millimeter wave link establishment method according to an embodiment of this application;
FIG. 6 is a schematic flowchart of still another millimeter wave link establishment method according to an embodiment of this application;
FIG. 7 is a schematic flowchart of still another millimeter wave link establishment method according to an embodiment of this application;
FIG. 8 is a schematic flowchart of still another millimeter wave link establishment method according to an embodiment of this application;
FIG. 9 is a schematic flowchart of still another millimeter wave link establishment method according to an embodiment of this application;
FIG. 10 is a schematic flowchart of still another millimeter wave link establishment method according to an embodiment of this application;
FIG. 11 is a schematic flowchart of still another millimeter wave link establishment method according to an embodiment of this application;
FIG. 12 is a schematic flowchart of still another millimeter wave link establishment method according to an embodiment of this application;
FIG. 13 is a schematic flowchart of still another millimeter wave link establishment method according to an embodiment of this application;
FIG. 14 is a schematic flowchart of still another millimeter wave link establishment method according to an embodiment of this application;
FIG. 15 is a diagram of a structure of a communication apparatus according to an embodiment of this application; and
FIG. 16 is a diagram of a structure of another communication apparatus according to an embodiment of this application.

### DESCRIPTION OF EMBODIMENTS

To better understand embodiments of this application, the following describes some terms or technologies used in embodiments of this application.

Sub-6GHz and millimeter wave: Sub-6G and millimeter wave are two frequency band codes for a 5G network. The 5G network is defined by the 3rd Generation Partnership Project (3rd Generation Partnership Project, 3GPP). 3GPP defines in the 5G wireless specification that working frequencies of 5G New Radio (New Radio, NR) include two parts: FR1 and FR2. FR1 defines 450 Mega Hertz (Mega Hertz, MHz) to 6000 MHz. These frequency bands are called Sub-6GHz. FR2 defines 24250 MHz to 52600 MHz. Because most of coverage bands of FR2 have wavelengths less than 10 millimeters, these frequency bands are called "millimeter waves". Compared with a Sub-6GHz signal, a millimeter wave signal is a high-frequency signal.

The sub-6GHz signal has a longer wavelength, is not susceptible to interference during propagation, has strong penetrability, and has a long propagation distance and wide coverage. In contrast to the sub-6 frequency band, the millimeter wave signal has a short wavelength, is susceptible to interference during propagation, has poor penetrability, and has narrow coverage. However, benefiting from physical characteristics of a radio wave, the short wavelength and narrow beam characteristics of the millimeter wave greatly enhance signal resolution, transmission security, and transmission speed. In addition, the millimeter wave has abundant spectrum resources, and can bring a larger network capacity.

In the conventional technology, when a millimeter wave is used to establish a link between a STA and an AP, because a millimeter wave signal is susceptible to interference during propagation, a signal for link establishment and interaction is easily transmitted unsuccessfully, and a success rate of establishing a millimeter wave link is low.

In view of this, an embodiment of this application provides a millimeter wave link establishment method. An AP and a STA may establish a first link by using a signal whose frequency is lower than that of a millimeter wave, and then transmit, via the first link, control information used to establish a millimeter wave link, to assist in establishing the millimeter wave link. Stability of the first link established by using the signal whose frequency is lower than that of the millimeter wave is good, and a transmitted signal is not susceptible to interference. Therefore, a success rate of transmitting control information used to establish a millimeter wave link is higher, and then a success rate of establishing a millimeter wave link can be improved.

The following describes the technical solutions provided in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding. In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Before the millimeter wave link establishment method provided in embodiments of this application is described, a communication system/service scenario to which the millimeter wave link establishment method provided in this application is applied is first described.

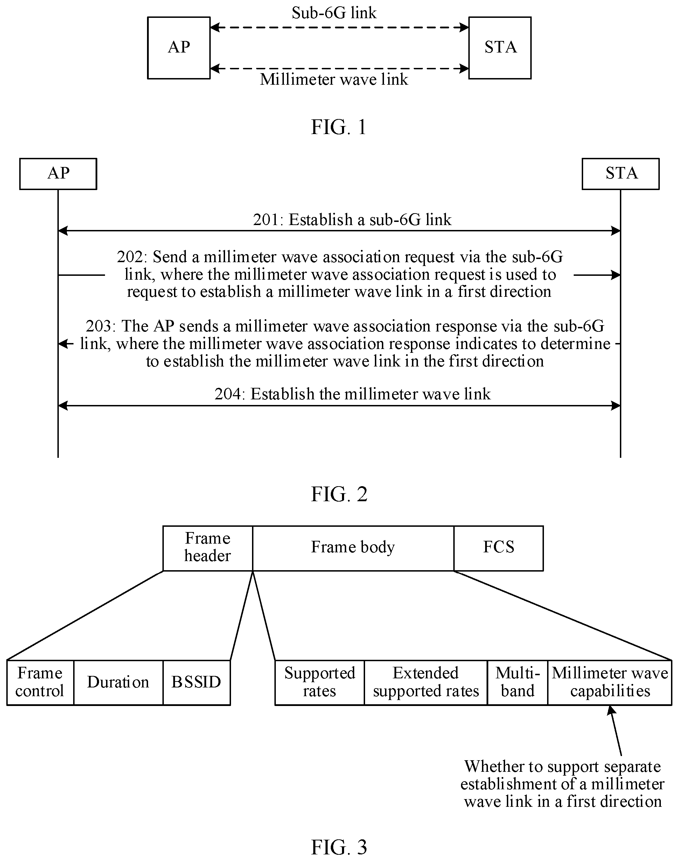

FIG. 1 is a diagram of a communication system according to this application. The communication system includes an AP 101 and a STA 102. A sub-6G link may be established between the AP 101 and the STA 102. In addition, the AP 101 and the STA 102 further have a capability of communicating with each other by using a millimeter wave. The AP 101 and the STA 102 may use a first link to assist in establishing a millimeter wave link. For specific implementation, refer to the following millimeter wave link establishment method. Details are not described herein.

It should be understood that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes, with reference to the communication system shown in FIG. 1, a millimeter wave link establishment method provided in an embodiment of this application. For actions, terms, and the like in embodiments of this application, refer to each other. This is not limited. In embodiments of this application, a message name, a parameter name in a message, or the like is merely an example. During specific implementation, other names may be used. This is not limited.

FIG. 2 is a schematic flowchart of a millimeter wave link establishment method according to an embodiment of this application. As shown in FIG. 2, the method may include the following steps.

Step 201: An AP and a STA establish a sub-6G link.

The sub-6G link is a communication link established by using a Sub-6GHz signal. After establishing the sub-6G link by using the Sub-6GHz signal, the AP and the STA may communicate with each other via the sub-6G link.

Step 202: The STA sends a millimeter wave association request (Association Request) to the AP via the sub-6G link, where the millimeter wave association request is used to request to establish a millimeter wave link in a first direction.

The millimeter wave link in the first direction is an uplink millimeter wave link or a downlink millimeter wave link, the uplink millimeter wave link is a millimeter wave link in a direction from the STA to the AP, and the downlink millimeter wave link is a millimeter wave link in a direction from the AP to the STA. In this embodiment of this application, link establishment needs to be separately initiated for millimeter wave links in both uplink and downlink directions by using millimeter wave association requests.

Optionally, a millimeter wave capabilities field of the millimeter wave association request may carry capability information about whether the STA supports separate establishment of the millimeter wave link in the first direction. For example, when the first direction is the uplink direction, the millimeter wave capabilities field of the millimeter wave association request may carry capability information about whether the STA supports separate establishment of the uplink millimeter wave link. When the first direction is the downlink direction, the millimeter wave capabilities field of the millimeter wave association request may carry capability information about whether the STA supports separate establishment of the downlink millimeter wave link.

In a possible implementation, the millimeter wave capabilities field of the millimeter wave association request may alternatively carry both the capability information about whether the STA supports separate establishment of the uplink millimeter wave link and the capability information about whether the STA supports separate establishment of the downlink millimeter wave link.

FIG. 3 is a diagram of a frame format of a millimeter wave association request according to this application. As shown in FIG. 3, the millimeter wave association request may include a media access control (media access control, MAC) header (MAC header), a frame body (frame body), and a frame check sequence (frame check sequence, FCS). The MAC header may include a frame control (frame control) field, a duration (Duration) field, and a basic service set identifier (basic service set identifier, BSSID) field. The frame body may include a supported rates (Supported Rates) field, an extended supported rates (Extended Supported Rates) field, a multi-band (Multi-band) field, and a millimeter wave capabilities (mmW Capabilities) field. For a meaning of a field in the frame format of the millimeter wave association request shown in FIG. 3, refer to descriptions in a related standard. The millimeter wave capabilities field of this embodiment of this application may additionally carry the capability information about whether the STA supports separate establishment of the millimeter wave link in the first direction.

Step 203: The AP sends a millimeter wave association response to the STA via the sub-6G link, where the millimeter wave association response indicates to determine to establish the millimeter wave link in the first direction.

Optionally, a millimeter wave capabilities field of the millimeter wave association response may carry capability information about whether the AP supports separate establishment of the millimeter wave link in the first direction. For example, when the first direction is the uplink direction, the millimeter wave capabilities field of the millimeter wave association response may carry capability information about whether the AP supports separate establishment of the uplink millimeter wave link. When the first direction is the downlink direction, the millimeter wave capabilities field of the millimeter wave association response may carry capability information about whether the AP supports separate establishment of the downlink millimeter wave link.

In a possible implementation, the millimeter wave capabilities field of the millimeter wave association response may alternatively carry both the capability information about whether the AP supports separate establishment of the uplink millimeter wave link and the capability information about whether the AP supports separate establishment of the downlink millimeter wave link.

Optionally, a millimeter wave option field of the millimeter wave association response may carry a first millimeter wave channel, and the millimeter wave association response indicates to determine to establish the millimeter wave link in the first direction by using the first millimeter wave channel. The first millimeter wave channel is an initial channel selected by the AP.

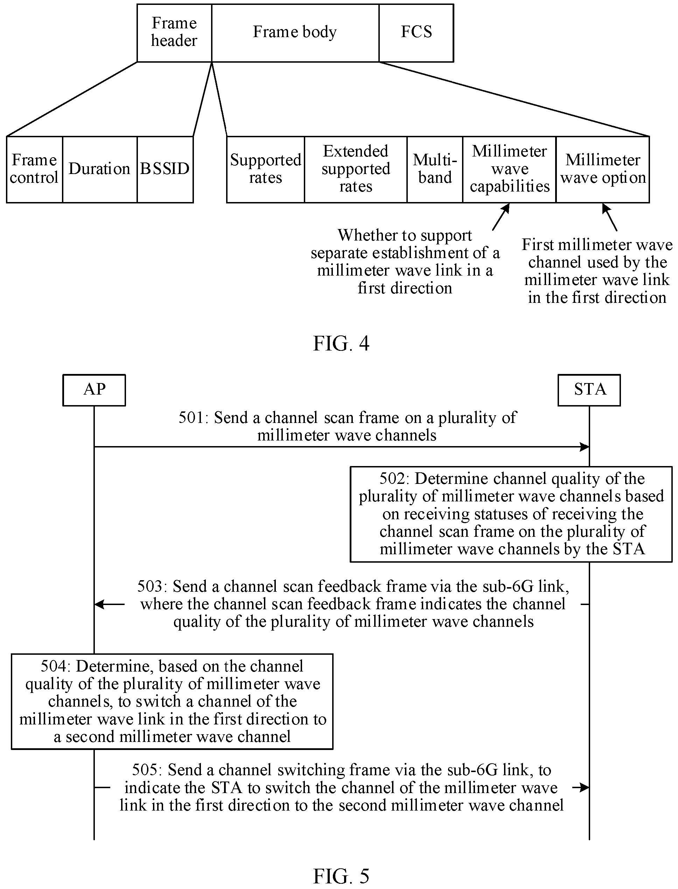

For example, FIG. 4 is a diagram of a frame format of a millimeter wave association response according to this application. As shown in FIG. 4, the millimeter wave association response may include a MAC header, a frame body, and an FCS. The MAC header may include a frame control field, a duration field, and a BSSID field. The frame body may include a supported rates field, an extended supported rates field, a multi-band field, a millimeter wave capabilities field, and a millimeter wave option field. For a meaning of a field in the frame format of the millimeter wave association response shown in FIG. 4, refer to descriptions in a related standard. The millimeter wave capabilities field of this embodiment of this application may additionally carry the capability information about whether the AP supports separate establishment of the millimeter wave link in the first direction, and the millimeter wave option field in this embodiment of this application may additionally carry the first millimeter wave channel used by the millimeter wave link in the first direction.

Step 204: The AP and the STA establish the millimeter wave link in the first direction.

In an implementation, the AP and the STA may successfully establish the millimeter wave link in the first direction when the millimeter wave capabilities field of the millimeter wave association request indicates that the STA supports separate establishment of the millimeter wave link in the first direction, and the millimeter wave capabilities field of the millimeter wave association response indicates that the AP supports separate establishment of the millimeter wave link in the first direction.

Based on the foregoing solution, the AP and the STA transmit, via the established sub-6G link, an interaction message used to establish a millimeter wave link (for example, the millimeter wave association request and the millimeter wave association response). A Sub-6GHz signal has a better anti-interference capability than a millimeter wave signal. Therefore, a success rate of transmitting the interaction message used to establish the millimeter wave link is higher, and a success rate of establishing the millimeter wave link can be greatly improved. This method can overcome a problem in a conventional manner where exchange of link establishment information by using a millimeter wave signal is highly susceptible to environmental interference, which leads to a millimeter wave link establishment failure.

In addition, in comparison with a solution in which a millimeter wave link in an uplink direction and a millimeter wave link in a downlink direction are established together and take effect in a current standard, an uplink millimeter wave link and a downlink millimeter wave link can be separately established in embodiments of this application, so that the separate establishment of the uplink millimeter wave link and the downlink millimeter wave link may be decoupled, which is more flexible.

Optionally, before the AP and the STA establish the sub-6G link, the AP and the STA may each broadcast a beacon (beacon) frame. Compared with a beacon frame in a conventional standard, in this application, the beacon frame sent by the AP may additionally indicate that the AP supports millimeter wave communication, and may further carry millimeter wave capability information and a millimeter wave communication parameter of the AP. In addition, in this application, the beacon frame sent by the STA may additionally indicate that the STA supports millimeter wave communication, and may further carry millimeter wave capability information and a millimeter wave communication parameter of the STA.

Optionally, before the AP and the STA establish the sub-6G link, the STA may send a probe request (Probe Request) frame to the AP, and the AP may return a probe response (Probe Response) frame to the STA. Compared with a probe request frame in a conventional standard, in this application, the probe request frame sent by the STA may additionally indicate that the STA supports millimeter wave communication, and may further carry millimeter wave capability information and a millimeter wave communication parameter of the STA. In addition, in this application, the probe request frame sent by the AP may additionally indicate that the AP supports millimeter wave communication, and may further carry millimeter wave capability information and a millimeter wave communication parameter of the AP.

Optionally, after the AP and the STA establish the uplink millimeter wave link, the AP may receive an uplink data frame from the STA via the uplink millimeter wave link, and send a downlink data frame to the STA via the sub-6G link. Alternatively, after the AP and the STA establish the downlink millimeter wave link, the AP may send a downlink data frame to the STA via the downlink millimeter wave link, and receive an uplink data frame from the STA via the sub-6G link. Based on this solution, communication via millimeter wave links in two directions between the AP and the STA may be decoupled, and communication can be performed after a millimeter wave link in one direction is established, without depending on establishment of a millimeter wave link in the other direction.

Optionally, the AP and the STA may establish an uplink millimeter wave link and a downlink millimeter wave link according to the method in step 201 to step 204, and subsequently, the millimeter wave link may be used for communication for data transmission in the uplink/downlink direction between the AP and the STA.

In conclusion, in this embodiment of this application, the AP and the STA may flexibly select such two links as the sub-6G link and the millimeter wave link as required for data transmission. A data transmission manner is more flexible, and data transmission efficiency and bandwidth utilization can be improved.

Optionally, after the millimeter wave links in the two directions between the AP and the STA are established, the AP and the STA may transmit a data frame via the millimeter wave link, and transmit a management frame and a control frame via the sub-6G link. Based on this solution, data transmission efficiency can be improved, and bandwidth utilization can be improved.

Optionally, the AP and the STA may transmit a data frame via the millimeter wave link in the first direction, where the data frame may include a first identifier, and the first identifier indicates that an acknowledgment (ACK) frame corresponding to the data frame is transmitted via the sub-6G link. Then, the AP and the STA may transmit the ACK frame corresponding to the data frame via the sub-6G link. Based on this solution, the AP may add the first identifier to the data frame sent via the millimeter wave link, to indicate that the ACK frame corresponding to the data frame is transmitted via the sub-6G link, so that the data frame and the control frame are transmitted via a same link, thereby improving data transmission efficiency and network bandwidth utilization.

Optionally, the ACK frame corresponding to the data frame transmitted by the AP and the STA via the sub-6G link may carry a second identifier, and the second identifier indicates that the data frame corresponding to the ACK frame is transmitted via the millimeter wave link in the first direction.

Optionally, after the AP and the STA establish the millimeter wave link in the first direction, the AP and/or the STA may further perform a channel scan procedure, so that a millimeter wave link with higher channel quality is used for communication for the millimeter wave link in the first direction.

In a possible implementation, when the millimeter wave link in the first direction is a downlink millimeter wave link, the millimeter wave link establishment method may further include steps shown in FIG. 5:
Step 501: An AP sends a channel scan frame to a STA on a plurality of millimeter wave channels, and correspondingly, the STA may receive the channel scan frame from the AP on the plurality of millimeter wave channels. The channel scan frame is used to determine channel quality of the plurality of millimeter wave channels, and the plurality of millimeter wave channels include the foregoing first millimeter wave channel.
Step 502: The STA determines channel quality of the plurality of millimeter wave channels based on receiving statuses of receiving the channel scan frame on the plurality of millimeter wave channels by the STA.
Step 503: The STA sends a channel scan feedback frame to the AP via the sub-6G link, where the channel scan feedback frame indicates the channel quality of the plurality of millimeter wave channels.
Step 504: The AP determines, based on the channel quality of the plurality of millimeter wave channels, to switch a channel of the millimeter wave link in the first direction to a second millimeter wave channel, where channel quality of the second millimeter wave channel is better than that of the first millimeter wave channel.

Optionally, the second millimeter wave channel is a channel with optimal channel quality of the plurality of millimeter wave channels indicated by the channel scan feedback frame.

Step 505: The AP sends a channel switching frame to the STA via the sub-6G link, where the channel switching frame indicates the STA to switch the channel of the millimeter wave link in the first direction to the second millimeter wave channel.

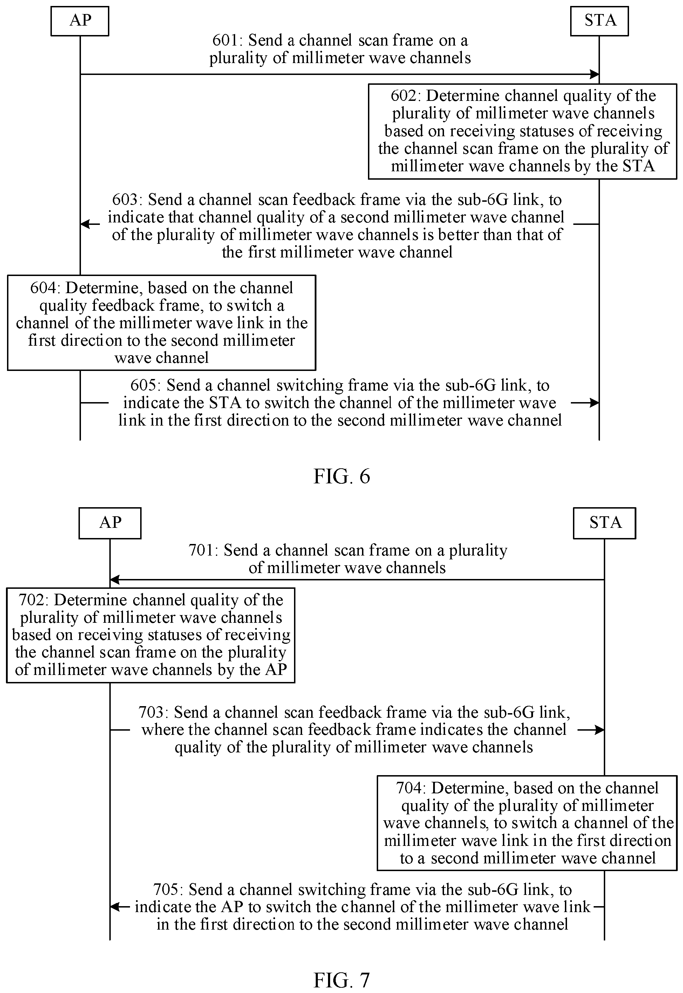

In another possible implementation, when the millimeter wave link in the first direction is a downlink millimeter wave link, the millimeter wave link establishment method may further include steps shown in FIG. 6:
Step 601 to step 602 are the same as step 501 to step 502.
Step 603: The STA sends a channel scan feedback frame to the AP via the sub-6G link, where the channel scan feedback frame indicates that channel quality of a second millimeter wave channel of the plurality of millimeter wave channels is better than that of the first millimeter wave channel.
Step 604: The AP determines, based on the channel quality feedback frame, to switch a channel of the millimeter wave link in the first direction to the second millimeter wave channel.
Step 605 is the same as step 505.

Optionally, step 501 and step 601 may be triggered and performed by the AP when it is found that the channel quality of the first millimeter wave channel is poor.

In a possible implementation, when the millimeter wave link in the first direction is an uplink millimeter wave link, the millimeter wave link establishment method may further include steps shown in FIG. 7:
Step 701: A STA sends a channel scan frame to an AP on a plurality of millimeter wave channels, and correspondingly, the AP may receive the channel scan frame from the STA on the plurality of millimeter wave channels. The channel scan frame is used to determine channel quality of the plurality of millimeter wave channels, and the plurality of millimeter wave channels include the foregoing first millimeter wave channel.
Step 702: The AP determines channel quality of the plurality of millimeter wave channels based on receiving statuses of receiving the channel scan frame on the plurality of millimeter wave channels by the AP.
Step 703: The AP sends a channel scan feedback frame to the STA via the sub-6G link, where the channel scan feedback frame indicates the channel quality of the plurality of millimeter wave channels.
Step 704: The AP determines, based on the channel quality of the plurality of millimeter wave channels, to switch a channel of the millimeter wave link in the first direction to a second millimeter wave channel, where channel quality of the second millimeter wave channel is better than that of the first millimeter wave channel.

In a possible implementation, the second millimeter wave channel is a channel with optimal channel quality of the plurality of millimeter wave channels indicated by the channel scan feedback frame.

Step 705: The STA sends a channel switching frame to the AP via the sub-6G link, where the channel switching frame indicates the AP to switch a channel of the millimeter wave link in the first direction to the second millimeter wave channel.

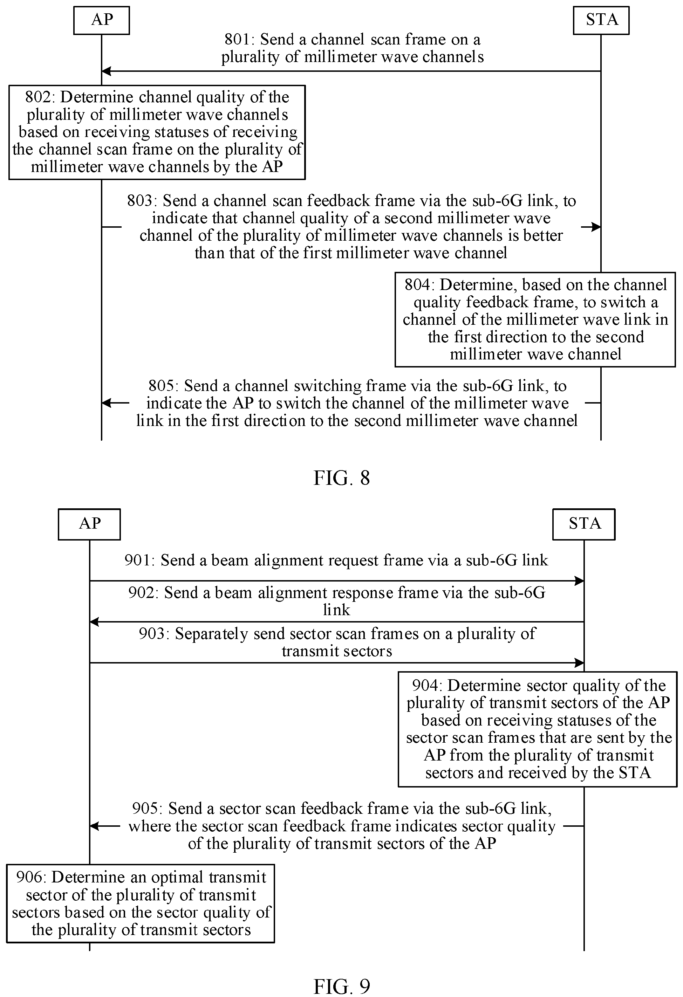

In a possible implementation, when the millimeter wave link in the first direction is an uplink millimeter wave link, the millimeter wave link establishment method may further include steps shown in FIG. 8:
Step 801 to step 802 are the same as step 701 to step 702.
Step 803: The AP sends a channel scan feedback frame to the STA via the sub-6G link, where the channel scan feedback frame indicates that channel quality of a second millimeter wave channel of the plurality of millimeter wave channels is better than that of the first millimeter wave channel.
Step 804: The STA determines, based on the channel quality feedback frame, to switch a channel of the millimeter wave link in the first direction to the second millimeter wave channel.
Step 805 is the same as step 705.

Optionally, step 701 and step 801 may be triggered and performed by the AP when it is found that the channel quality of the first millimeter wave channel is poor.

Based on the foregoing method embodiments corresponding to FIG. 5 to FIG. 8, after the AP and the STA establish the millimeter wave link by using the first millimeter wave channel, the AP and the STA may further perform a channel scan process, so that the millimeter wave link uses a millimeter wave channel with better channel quality, thereby improving performance of the millimeter wave link. The STA and the AP more reliably transmit the channel scan feedback frame via the sub-6G link than transmitting the channel scan feedback frame via the millimeter wave link.

Optionally, in a process of performing channel scan, if the AP or the STA determines, based on a receiving status of the channel scan frame after receiving the channel scan frame, that the first millimeter wave channel is a channel with optimal channel quality of the plurality of millimeter wave channels, the millimeter wave link in the first direction continues to use the first millimeter wave channel, and channel switching is not performed.

Optionally, after the AP and the STA establish the millimeter wave link in the first direction, the AP and/or the STA may further perform a beam alignment procedure, to improve performance of communication between the AP and the STA.

In a possible implementation, the millimeter wave link establishment method may further include steps shown in FIG. 9:
Step 901: An AP sends a beam alignment request frame to the STA via the sub-6G link.
Step 902: The STA sends a beam alignment response frame to the AP via the sub-6G link.
Step 903: The AP separately sends sector scan frames to the STA on a plurality of transmit sectors, and correspondingly, the STA receives the sector scan frames sent by the AP from the plurality of transmit sectors. The sector scan frames are transmitted via an established millimeter wave link in a first direction.
Step 904: The STA determines sector quality of the plurality of transmit sectors of the AP based on receiving statuses of the sector scan frames that are sent by the AP from the plurality of transmit sectors and received by the STA.
Step 905: The STA sends a sector scan feedback frame to the AP via the sub-6G link, where the sector scan feedback frame indicates sector quality of the plurality of transmit sectors of the AP.
Step 906: The AP determines an optimal transmit sector of the plurality of transmit sectors based on the sector quality of the plurality of transmit sectors.

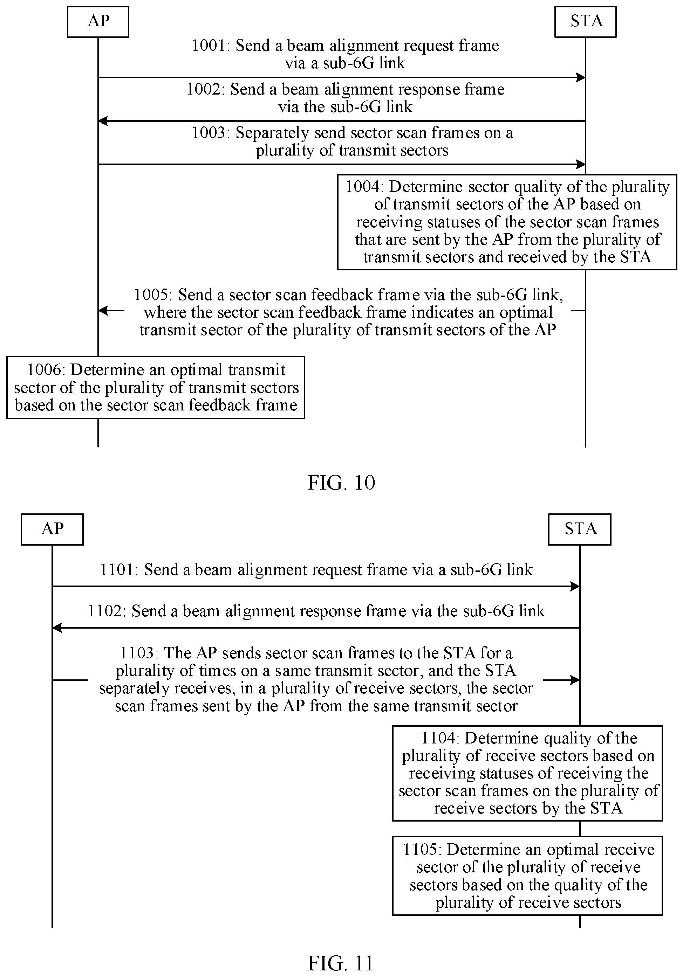

In another possible implementation, the millimeter wave link establishment method may further include steps shown in FIG. 10:
Step 1001 to step 1004 are the same as step 901 to step 904.
Step 1005: The STA sends a sector scan feedback frame to the AP via the sub-6G link, where the sector scan feedback frame indicates an optimal transmit sector of the plurality of transmit sectors of the AP.
Step 1006: The AP determines an optimal transmit sector of the plurality of transmit sectors based on the sector scan feedback frame.

Based on the foregoing method embodiments corresponding to FIG. 9 and FIG. 10, the AP may align the transmit sectors. It should be understood that after determining the optimal transmit sector, the AP may subsequently transmit a millimeter wave signal to the STA based on the optimal transmit sector, thereby improving communication performance.

In still another possible implementation, the millimeter wave link establishment method may further include steps shown in FIG. 11:
Step 1101 to step 1102 are the same as step 901 to step 902.
Step 1103: The AP sends sector scan frames to the STA for a plurality of times on a same transmit sector, and correspondingly, the STA separately receives, in a plurality of receive sectors, the sector scan frames sent by the AP from the same transmit sector. The sector scan frames are transmitted via an established millimeter wave link in a first direction.

Optionally, step 1103 may be performed after step 906 or step 1006, and the transmit sector in step 1103 may be an optimal transmit sector determined by the AP.

Step 1104: The STA determines quality of the plurality of receive sectors based on receiving statuses of receiving the sector scan frames on the plurality of receive sectors by the STA.

Step 1105: The STA determines an optimal receive sector of the plurality of receive sectors based on the quality of the plurality of receive sectors.

Based on the foregoing method embodiment corresponding to FIG. 11, the STA may align the receive sectors. It should be understood that after determining the optimal receive sector, the STA may subsequently receive a millimeter wave signal from the AP based on the optimal receive sector, thereby improving communication performance.

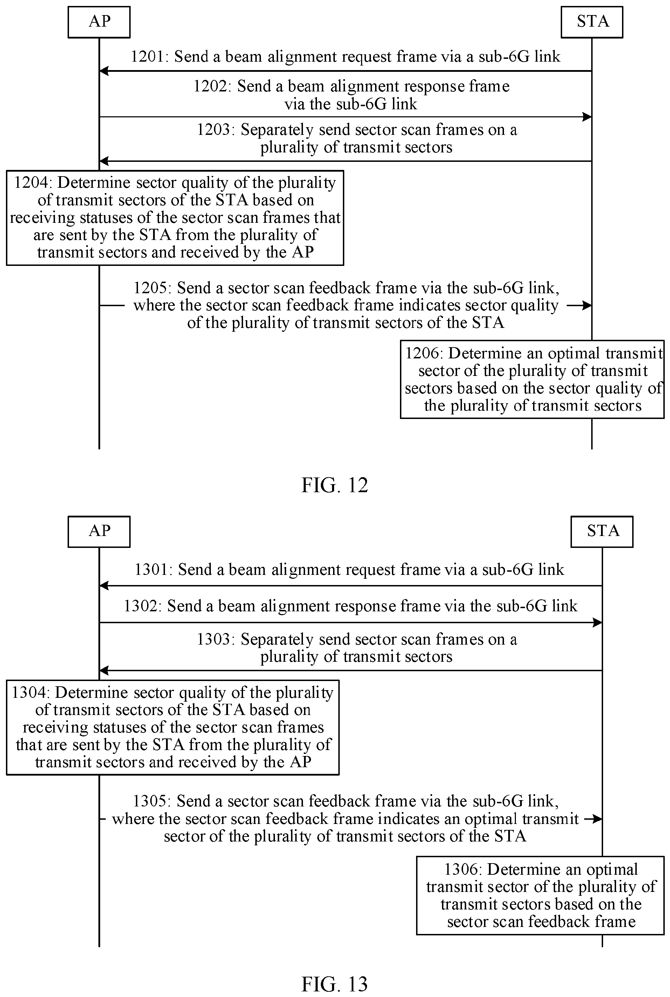

In still another possible implementation, the millimeter wave link establishment method may further include steps shown in FIG. 12:
Step 1201: A STA sends a beam alignment request frame to the AP via the sub-6G link.
Step 1202: The AP sends a beam alignment response frame to the STA via the sub-6G link.
Step 1203: The STA separately sends sector scan frames to the AP on a plurality of transmit sectors, and correspondingly, the AP receives the sector scan frames sent by the STA from the plurality of transmit sectors. The sector scan frames are transmitted via an established millimeter wave link in a first direction.
Step 1204: The AP determines sector quality of the plurality of transmit sectors of the STA based on receiving statuses of the sector scan frames that are sent by the STA from the plurality of transmit sectors and received by the AP.
Step 1205: The AP sends a sector scan feedback frame to the STA via the sub-6G link, where the sector scan feedback frame indicates sector quality of the plurality of transmit sectors of the STA.
Step 1206: The STA determines an optimal transmit sector of the plurality of transmit sectors based on the sector quality of the plurality of transmit sectors.

In another possible implementation, the millimeter wave link establishment method may further include steps shown in FIG. 13:
Step 1301 to step 1304 are the same as step 1201 to step 1204.
Step 1305: The AP sends a sector scan feedback frame to the STA via the sub-6G link, where the sector scan feedback frame indicates an optimal transmit sector of the plurality of transmit sectors of the STA.
Step 1306: The STA determines an optimal transmit sector of the plurality of transmit sectors based on the sector scan feedback frame.

Based on the foregoing method embodiments corresponding to FIG. 12 and FIG. 13, the STA may align the transmit sectors. It should be understood that after determining the optimal transmit sector, the STA may subsequently transmit a millimeter wave signal to the AP based on the optimal transmit sector, thereby improving communication performance.

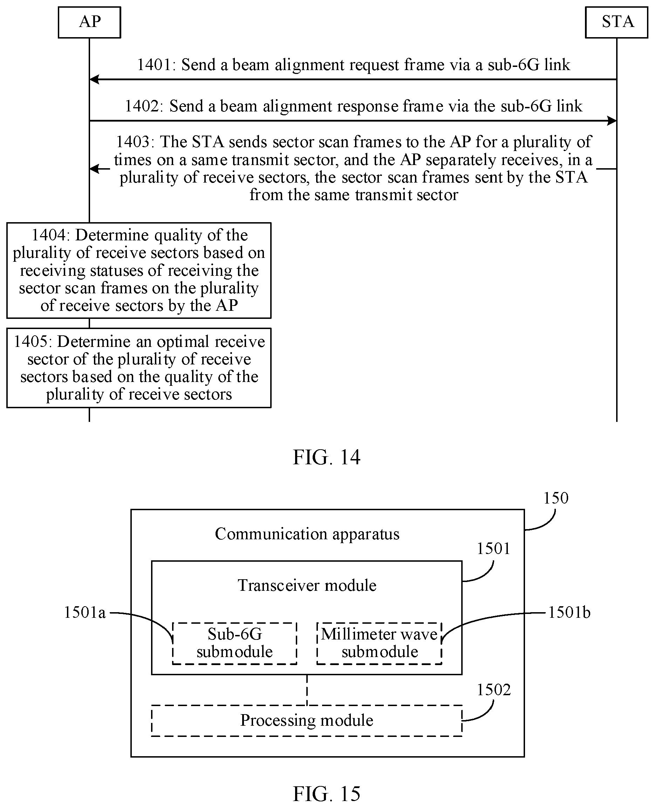

In still another possible implementation, the millimeter wave link establishment method may further include steps shown in FIG. 14:
Step 1401 to step 1402 are the same as step 1201 to step 1202.
Step 1403: The STA sends sector scan frames to the AP for a plurality of times on a same transmit sector, and correspondingly, the AP separately receives, in a plurality of receive sectors, the sector scan frames sent by the STA from the same transmit sector. The sector scan frames are transmitted via an established millimeter wave link in a first direction.

Optionally, step 1403 may be performed at or after step 1206, and the transmit sector in step 1403 may be an optimal transmit sector determined by the STA.

Step 1404: The AP determines quality of the plurality of receive sectors based on receiving statuses of receiving the sector scan frames on the plurality of receive sectors by the AP.

Step 1405: The AP determines an optimal receive sector of the plurality of receive sectors based on the quality of the plurality of receive sectors.

Based on the foregoing method embodiment corresponding to FIG. 14, the AP may align the receive sectors. It should be understood that after determining the optimal receive sector, the AP may subsequently receive a millimeter wave signal from the STA based on the optimal receive sector, thereby improving communication performance.

Optionally, the millimeter wave link establishment method in this embodiment of this application may be performed by a communication apparatus. The communication apparatus may be the management apparatus in the foregoing method embodiments, or a device including the foregoing management apparatus, or a component that can be used for the management apparatus. To implement the foregoing functions, the communication apparatus includes a corresponding hardware structure and/or software module for implementing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

FIG. 15 is a diagram of a structure of a communication apparatus. The communication apparatus 150 includes a transceiver module 1501. Optionally, the communication apparatus 150 may further include a processing module 1502.

An example in which the communication apparatus 150 is the AP in the foregoing method embodiments is used.

The transceiver module may be configured to establish a sub-6G link with a STA. The transceiver module may be further configured to receive a millimeter wave association request from the STA via the sub-6G link, where the millimeter wave association request is used to request to establish a millimeter wave link in a first direction. The transceiver module may be further configured to send a millimeter wave association response to the STA via the sub-6G link, where the millimeter wave association response indicates to determine to establish the millimeter wave link in the first direction. The transceiver module may be further configured to establish the millimeter wave link in the first direction with the STA.

Optionally, a millimeter wave capabilities field of the millimeter wave association request carries capability information about whether the STA supports separate establishment of the millimeter wave link in the first direction, and a millimeter wave capabilities field of the millimeter wave association response carries capability information about whether the AP supports separate establishment of the millimeter wave link in the first direction. The transceiver module 1501 may be specifically configured to establish the millimeter wave link in the first direction with the STA when the millimeter wave capabilities field of the millimeter wave association request indicates that the STA supports separate establishment of the millimeter wave link in the first direction, and the millimeter wave capabilities field of the millimeter wave association response indicates that the AP supports separate establishment of the millimeter wave link in the first direction.

Optionally, when the millimeter wave link in the first direction is an uplink millimeter wave link, the transceiver module 1501 may be further configured to: receive an uplink data frame from the STA via the uplink millimeter wave link, and send a downlink data frame to the STA via the sub-6G link.

Optionally, when the millimeter wave link in the first direction is a downlink millimeter wave link, the transceiver module 1501 may be further configured to: send a downlink data frame to the STA via the downlink millimeter wave link, and receive an uplink data frame from the STA via the sub-6G link.

Optionally, the transceiver module 1501 may be further configured to: transmit a data frame via the millimeter wave link in the first direction with the STA, and transmit the ACK frame corresponding to the data frame via the sub-6G link with the STA. The data frame includes a first identifier, and the first identifier indicates that an acknowledgment ACK frame corresponding to the data frame is transmitted via the sub-6G link. The ACK frame includes a second identifier, and the second identifier indicates that the data frame corresponding to the ACK frame is transmitted via the millimeter wave link in the first direction.

Optionally, the millimeter wave link in the first direction is a downlink millimeter wave link. The transceiver module 1501 may be further configured to send a channel scan frame to the STA on a plurality of millimeter wave channels, where the channel scan frame is used to determine channel quality of the plurality of millimeter wave channels, and the plurality of millimeter wave channels include the first millimeter wave channel. In addition, the transceiver module 1501 may be further configured to receive a channel scan feedback frame from the STA via the sub-6G link, where the channel scan feedback frame indicates the channel quality of the plurality of millimeter wave channels. The processing module 1502 may be configured to determine, based on the channel quality of the plurality of millimeter wave channels, to switch a channel of the millimeter wave link in the first direction to the second millimeter wave channel, where channel quality of the second millimeter wave channel is better than that of the first millimeter wave channel. The transceiver module 1501 may be further configured to send a channel switching frame to the STA via the sub-6G link, where the channel switching frame indicates the STA to switch the channel of the millimeter wave link in the first direction to the second millimeter wave channel.

Optionally, the millimeter wave link in the first direction is a downlink millimeter wave link. The transceiver module 1501 may be further configured to send a channel scan frame to the STA on a plurality of millimeter wave channels, where the channel scan frame is used to determine quality of the plurality of millimeter wave channels, and the plurality of millimeter wave channels include the first millimeter wave channel. The transceiver module 1501 may be further configured to receive a channel scan feedback frame from the STA via the sub-6G link, where the channel scan feedback frame indicates that channel quality of a second millimeter wave channel of the plurality of millimeter wave channels is better than that of the first millimeter wave channel. The processing module 1502 may be configured to determine, based on the channel scan feedback frame, to switch a channel of the millimeter wave link in the first direction to the second millimeter wave channel. The transceiver module 1501 may be further configured to send a channel switching frame to the STA via the sub-6G link, where the channel switching frame indicates the STA to switch the channel of the millimeter wave link in the first direction to the second millimeter wave channel.

Optionally, the millimeter wave link in the first direction is an uplink millimeter wave link. The transceiver module 1501 may be further configured to receive a channel scan frame from the STA on a plurality of millimeter wave channels, where the channel scan frame is used to determine quality of the plurality of millimeter wave channels, and the plurality of millimeter wave channels include the first millimeter wave channel. The processing module 1502 may be configured to determine channel quality of the plurality of millimeter wave channels based on receiving statuses of the channel scan frame on the plurality of millimeter wave channels. The transceiver module 1501 may be further configured to send a channel scan feedback frame to the STA via the sub-6G link, where the channel scan feedback frame indicates the quality of the plurality of millimeter wave channels. The transceiver module 1501 may be further configured to receive a channel switching frame from the STA via the sub-6G link, where the channel switching frame indicates the AP to switch a channel of the millimeter wave link in the first direction to a second millimeter wave channel, and channel quality of the second millimeter wave channel is better than that of the first millimeter wave channel.

Optionally, the millimeter wave link in the first direction is an uplink millimeter wave link. The transceiver module 1501 may be further configured to receive a channel scan frame from the STA on a plurality of millimeter wave channels, where the channel scan frame is used to determine quality of the plurality of millimeter wave channels, and the plurality of millimeter wave channels include the first millimeter wave channel. The processing module 1502 may be configured to determine channel quality of the plurality of millimeter wave channels based on receiving statuses of the channel scan frame on the plurality of millimeter wave channels. The transceiver module 1501 may be further configured to send a channel scan feedback frame to the STA via the sub-6G link, where the channel scan feedback frame indicates that channel quality of a second millimeter wave channel of the plurality of millimeter wave channels is better than that of the first millimeter wave channel. The transceiver module 1501 may be further configured to receive a channel switching frame from the STA via the sub-6G link, where the channel switching frame indicates the AP to switch the channel of the millimeter wave link in the first direction to the second millimeter wave channel.

Optionally, the transceiver module 1501 may be further configured to send a beam alignment request frame to the STA via the sub-6G link. The transceiver module 1501 may be further configured to receive a beam alignment response frame from the STA via the sub-6G link. The transceiver module 1501 may be further configured to separately send sector scan frames to the STA on the plurality of transmit sectors, where the sector scan frames are transmitted via the millimeter wave link in the first direction. The transceiver module 1501 may be further configured to receive a sector scan feedback frame from the STA via the sub-6G link, where the sector scan feedback frame indicates sector quality of the plurality of transmit sectors. The processing module 1502 may be configured to determine an optimal transmit sector of the plurality of transmit sectors based on the sector quality of the plurality of transmit sectors.

Optionally, the transceiver module 1501 may be further configured to send a beam alignment request frame to the STA via the sub-6G link. The transceiver module 1501 may be further configured to receive a beam alignment response frame from the STA via the sub-6G link. The transceiver module 1501 may be further configured to separately send sector scan frames to the STA on the plurality of transmit sectors, where the sector scan frames are transmitted via the millimeter wave link in the first direction. The transceiver module 1501 may be further configured to receive a sector scan feedback frame from the STA via the sub-6G link, where the sector scan feedback frame indicates an optimal transmit sector of the plurality of transmit sectors.

Optionally, the transceiver module 1501 may be further configured to receive a beam alignment request frame from the STA via the sub-6G link. The transceiver module 1501 may be further configured to send a beam alignment response frame to the STA via the sub-6G link. The transceiver module 1501 may be further configured to separately receive, on the plurality of receive sectors, sector scan frames sent by the STA from a same transmit sector, where the sector scan frames are transmitted via the millimeter wave link in the first direction. The processing module 1502 may be configured to determine an optimal receive sector of the plurality of receive sectors based on receiving statuses of receiving the sector scan frames on the plurality of receive sectors.

An example in which the communication apparatus 150 is the STA in the foregoing method embodiments is used.

The transceiver module 1501 may be configured to establish a sub-6G link with an AP. The transceiver module 1501 may be further configured to send a millimeter wave association request to the AP via the sub-6G link, where the millimeter wave association request is used to request to establish a millimeter wave link in a first direction. The transceiver module 1501 may be further configured to receive, via the sub-6G link, a millimeter wave association response sent by the STA, where the millimeter wave association response indicates to determine to establish the millimeter wave link in the first direction. The transceiver module 1501 may be further configured to establish the millimeter wave link in the first direction with the AP.

Optionally, a millimeter wave capabilities field of the millimeter wave association request carries capability information about whether the STA supports separate establishment of the millimeter wave link in the first direction, and a millimeter wave capabilities field of the millimeter wave association response carries capability information about whether the AP supports separate establishment of the millimeter wave link in the first direction. The transceiver module 1501 may be specifically configured to establish the millimeter wave link in the first direction with the AP when the millimeter wave capabilities field of the millimeter wave association request indicates that the STA supports separate establishment of the millimeter wave link in the first direction, and the millimeter wave capabilities field of the millimeter wave association response indicates that the AP supports separate establishment of the millimeter wave link in the first direction.

Optionally, when the millimeter wave link in the first direction is an uplink millimeter wave link, the transceiver module 1501 may be further configured to: send an uplink data frame to the AP via the uplink millimeter wave link, and receive a downlink data frame from the AP via the sub-6G link.

Optionally, when the millimeter wave link in the first direction is a downlink millimeter wave link, the transceiver module 1501 may be further configured to: receive a downlink data frame from the AP via the downlink millimeter wave link, and send an uplink data frame to the AP via the sub-6G link.

Optionally, the transceiver module 1501 may be further configured to: transmit a data frame via the millimeter wave link in the first direction with the AP, and transmit the ACK frame corresponding to the data frame via the sub-6G link with the AP. The data frame includes a first identifier, and the first identifier indicates that an acknowledgment ACK frame corresponding to the data frame is transmitted via the sub-6G link. The ACK frame includes a second identifier, and the second identifier indicates that the data frame corresponding to the ACK frame is transmitted via the millimeter wave link in the first direction.

Optionally, the millimeter wave link in the first direction is a downlink millimeter wave link. The transceiver module 1501 may be further configured to receive a channel scan frame from the AP on a plurality of millimeter wave channels, where the channel scan frame is used to determine channel quality of the plurality of millimeter wave channels, and the plurality of millimeter wave channels include the first millimeter wave channel. The processing module 1502 may be configured to determine channel quality of the plurality of millimeter wave channels based on receiving statuses of the channel scan frame on the plurality of millimeter wave channels. The transceiver module 1501 may be further configured to send a channel scan feedback frame to the AP via the sub-6G link, where the channel scan feedback frame indicates the channel quality of the plurality of millimeter wave channels. The transceiver module 1501 may be further configured to receive a channel switching frame from the AP via the sub-6G link, where the channel switching frame indicates the STA to switch the channel of the millimeter wave link in the first direction to the second millimeter wave channel.

Optionally, the millimeter wave link in the first direction is a downlink millimeter wave link. The transceiver module 1501 may be further configured to receive a channel scan frame from the AP on a plurality of millimeter wave channels, where the channel scan frame is used to determine quality of the plurality of millimeter wave channels, and the plurality of millimeter wave channels include the first millimeter wave channel. The processing module 1502 may be configured to determine channel quality of the plurality of millimeter wave channels based on receiving statuses of the channel scan frame on the plurality of millimeter wave channels. The transceiver module 1501 may be further configured to send a channel scan feedback frame to the AP via the sub-6G link, where the channel scan feedback frame indicates that channel quality of a second millimeter wave channel of the plurality of millimeter wave channels is better than that of the first millimeter wave channel. The transceiver module 1501 may be further configured to receive a channel switching frame from the AP via the sub-6G link, where the channel switching frame indicates the STA to switch the channel of the millimeter wave link in the first direction to the second millimeter wave channel.

Optionally, the millimeter wave link in the first direction is an uplink millimeter wave link. The transceiver module 1501 may be further configured to send a channel scan frame to the AP on a plurality of millimeter wave channels, where the channel scan frame is used to determine quality of the plurality of millimeter wave channels, and the plurality of millimeter wave channels include the first millimeter wave channel. The transceiver module 1501 may be further configured to receive a channel scan feedback frame from the AP via the sub-6G link, where the channel scan feedback frame indicates the quality of the plurality of millimeter wave channels. The processing module 1502 may be configured to determine, based on the quality of the plurality of millimeter wave channels, to switch a channel of the millimeter wave link in the first direction to a second millimeter wave channel. The transceiver module 1501 may be further configured to send a channel switching frame to the AP via the sub-6G link, where the channel switching frame indicates the AP to switch the channel of the millimeter wave link in the first direction to the second millimeter wave channel. Channel quality of the second millimeter wave channel is better than that of the first millimeter wave channel.

Optionally, the millimeter wave link in the first direction is an uplink millimeter wave link. The transceiver module 1501 may be further configured to send a channel scan frame to the AP on a plurality of millimeter wave channels, where the channel scan frame is used to determine quality of the plurality of millimeter wave channels, and the plurality of millimeter wave channels include the first millimeter wave channel. The transceiver module 1501 may be further configured to receive a channel scan feedback frame from the AP via the sub-6G link, where the channel scan feedback frame indicates that channel quality of a second millimeter wave channel of the plurality of millimeter wave channels is better than that of the first millimeter wave channel. The processing module 1502 may be configured to determine, based on the channel scan feedback frame, to switch a channel of the millimeter wave link in the first direction to the second millimeter wave channel. The transceiver module 1501 may be further configured to send a channel switching frame to the AP via the sub-6G link, where the channel switching frame indicates the AP to switch the channel of the millimeter wave link in the first direction to the second millimeter wave channel.

Optionally, the transceiver module 1501 may be further configured to send a beam alignment request frame to the AP via the sub-6G link. The transceiver module 1501 may be further configured to receive a beam alignment response frame from the AP via the sub-6G link. The transceiver module 1501 may be further configured to separately send sector scan frames to the AP on the plurality of transmit sectors, where the sector scan frames are transmitted via the millimeter wave link in the first direction. The transceiver module 1501 may be further configured to receive a sector scan feedback frame from the AP via the sub-6G link, where the sector scan feedback frame indicates sector quality of the plurality of transmit sectors. The processing module 1502 may be configured to determine an optimal transmit sector of the plurality of transmit sectors based on the sector quality of the plurality of transmit sectors.

Optionally, the transceiver module 1501 may be further configured to send a beam alignment request frame to the AP via the sub-6G link. The transceiver module 1501 may be further configured to receive a beam alignment response frame from the AP via the sub-6G link. The transceiver module 1501 may be further configured to separately send sector scan frames to the AP on the plurality of transmit sectors, where the sector scan frames are transmitted via the millimeter wave link in the first direction. The transceiver module 1501 may be further configured to receive a sector scan feedback frame from the AP via the sub-6G link, where the sector scan feedback frame indicates an optimal transmit sector of the plurality of transmit sectors.

Optionally, the transceiver module 1501 may be further configured to receive a beam alignment request frame from the AP via the sub-6G link. The transceiver module 1501 may be further configured to send a beam alignment response frame to the AP via the sub-6G link. The transceiver module 1501 may be further configured to separately receive, on the plurality of receive sectors, sector scan frames sent by the AP from a same transmit sector, where the sector scan frames are transmitted via the millimeter wave link in the first direction. The processing module 1502 may be configured to determine an optimal receive sector of the plurality of receive sectors based on receiving statuses of receiving the sector scan frames on the plurality of receive sectors.

All related content of each step involved in the foregoing method embodiment may be referenced to a function description of a corresponding functional module, and details are not described herein again. The communication apparatus 150 provided in this embodiment may perform the foregoing millimeter wave link establishment method. Therefore, for technical effects that can be achieved by the communication apparatus, refer to the foregoing method embodiments. Details are not described herein again.

In this embodiment of this application, functional modules of the communication apparatus may be divided based on different method behaviors in the foregoing method embodiments. In a possible implementation, the transceiver module 1501 may specifically include a sub-6G submodule 1501a and a millimeter wave submodule 1501b. Each behavior of using sub-6G link communication in the foregoing embodiments may be implemented by the sub-6G submodule 1501a, and each behavior of using millimeter wave communication in the foregoing embodiments may be implemented by the millimeter wave submodule 1501b.

It should be understood that division into modules in embodiments of this application is an example, and is merely logical function division. During actual implementation, there may be another division manner. For example, two or more functions may alternatively be integrated into one processing module. In addition, the integrated module may be implemented in a form of hardware, or may be implemented in a form of a software functional module. This is not limited in this application.

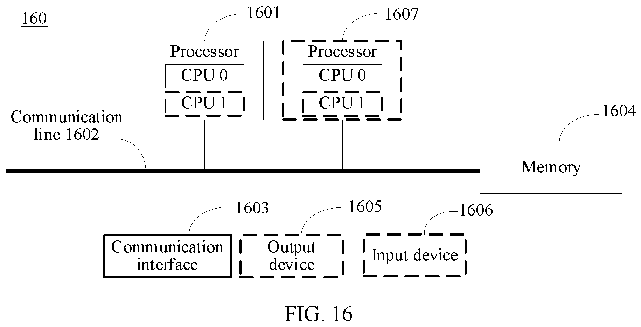

In this embodiment, the communication apparatus 150 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 150 may be in a form of a communication apparatus 160 shown in FIG. 16.

FIG. 16 is a diagram of a structure of another communication apparatus according to an embodiment of this application. As shown in FIG. 16, the communication apparatus 160 includes one or more processors 1601, a communication line 1602, and at least one communication interface (in FIG. 16, an example in which a communication interface 1603 and one processor 1601 are included is only used for description). Optionally, the communication apparatus may further include a memory 1604. The processor 1601 may be a general-purpose central processing unit (central processing unit, CPU), a microprocessor, an application-specific integrated circuit (application-specific integrated circuit, ASIC), or one or more integrated circuits configured to control program execution of the solutions of this application. The communication line 1602 may include a path used for communication between different components. The communication interface 1603 may be a transceiver module configured to communicate with another device or a communication network, for example, an Ethernet, a RAN, or a wireless local area network (wireless local area network, WLAN). For example, the transceiver module may be an apparatus such as a transceiver. Optionally, the communication interface 1603 may alternatively be a transceiver circuit located in the processor 1601, and is configured to implement signal input and signal output of the processor. The memory 1604 may be an apparatus having a storage function. For example, the memory may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of instructions or a data structure and that can be accessed by a computer, but is not limited thereto. The memory may exist independently, and is connected to the processor by the communication line 1602. The memory may alternatively be integrated with the processor. The memory 1604 is configured to store computer-executable instructions for executing the solutions in this application, and the processor 1601 controls execution of the computer-executable instructions. The processor 1601 is configured to execute the computer-executable instructions stored in the memory 1604, to implement the millimeter wave link establishment method provided in embodiments of this application. Alternatively, the processor 1601 in this embodiment of this application performs a processing-related function in the millimeter wave link establishment method provided in the embodiments of this application, and the communication interface 1603 is responsible for communicating with another device or a communication network. This is not specifically limited in this embodiment of this application. The computer-executable instructions in embodiments of this application may also be referred to as application program code. This is not specifically limited in embodiments of this application. In an embodiment, the processor 1601 may include one or more CPUs, for example, a CPU 0 and a CPU 1 in FIG. 16.

In an embodiment, the communication apparatus 160 may include a plurality of processors, for example, the processor 1601 and a processor 1607 in FIG. 16. Each of these processors may be a single-core (single-core) processor, or may be a multi-core (multi-core) processor. The processor may include but is not limited to at least one of the following computing devices that run various types of software: a central processing unit (central processing unit, CPU), a microprocessor, a digital signal processor (digital signal processor, DSP), a microcontroller unit (microcontroller unit, MCU), an artificial intelligence processor, and the like. Each computing device may include one or more cores for executing software instructions to perform an operation or processing.

In an embodiment, the communication apparatus 160 may further include an output device 1605 and an input device 1606. The output device 1605 communicates with the processor 1601, and may display information in a plurality of manners. For example, the output device 1605 may be a liquid crystal display (liquid crystal display, LCD), a light emitting diode (light emitting diode, LED) display device, a cathode ray tube (cathode ray tube, CRT) display device, or a projector (projector). The input device 1606 communicates with the processor 1601, and may receive an input from a user in a plurality of manners. For example, the input device 1606 may be a mouse, a keyboard, a touchscreen device, or a sensor device.

The communication apparatus 160 may also be referred to as a communication device sometimes, and may be a general-purpose device or a dedicated device. For example, the communication apparatus 160 may be a controller in a network or a device having a structure similar to that in FIG. 16. A type of the communication apparatus 160 is not limited in this embodiment of this application.

The processor 1601 in the communication apparatus 160 shown in FIG. 16 may invoke the computer-executable instructions stored in the memory 1604, to enable the communication apparatus 160 to perform the millimeter wave link establishment method in the foregoing method embodiments. The communication apparatus 160 provided in this embodiment may perform the foregoing millimeter wave link establishment method. Therefore, for technical effects that can be achieved by the communication apparatus, refer to the foregoing method embodiments. Details are not described herein again.

Sequence numbers of the foregoing processes do not mean execution sequences in embodiments of this application. The execution sequences of the processes should be determined based on functions and internal logic of the processes, and should not be construed as any limitation on the implementation processes of embodiments of this application. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit. All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid-state disk, SSD)), or the like.

Terms such as "component", "module", and "system" used in this application are used to indicate computer-related entities. The computer-related entities may be hardware, firmware, combinations of hardware and software, software, or software in running. For example, a component may be but is not limited to a process that runs on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and based on, for example, a signal having one or more data packets (for example, data from one component, where the component interacts with another component in a local system or a distributed system, and/or interacts with another system via a network such as the Internet by using a signal). This application presents aspects, embodiments, or features around a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner. In embodiments of this application, one of information (information), signal (signal), message (message), or channel (channel) may be used sometimes. It should be noted that expressed meanings are consistent when differences are not emphasized. The terms "of (of)", "corresponding (corresponding, relevant)", and "corresponding (corresponding)" may be interchangeably used sometimes. It should be noted that meanings expressed by the terms are consistent when differences of the terms are not emphasized. Sometimes, "system" and "network" may be used together. When the difference is not emphasized, the meanings to be expressed are consistent. For example, "communication network" also refers to "communication system". The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A millimeter wave link establishment method, wherein the method comprises:
establishing, by an access point AP and a user station STA, a sub-6G link;
receiving, by the AP, a millimeter wave association request from the STA by using the sub-6G link, wherein the millimeter wave association request is used to request to establish a millimeter wave link in a first direction;
sending, by the AP, a millimeter wave association response to the STA via the sub-6G link, wherein the millimeter wave association response indicates to determine to establish the millimeter wave link in the first direction; and
establishing, by the AP and the STA, the millimeter wave link in the first direction.

2. The method according to claim 1, wherein a millimeter wave capabilities field of the millimeter wave association request carries capability information about whether the STA supports separate establishment of the millimeter wave link in the first direction, and a millimeter wave capabilities field of the millimeter wave association response carries capability information about whether the AP supports separate establishment of the millimeter wave link in the first direction; and
establishing, by the AP and the STA, the millimeter wave link in the first direction comprises:
establishing, by the AP and the STA, the millimeter wave link in the first direction when the millimeter wave capabilities field of the millimeter wave association request indicates that the STA supports separate establishment of the millimeter wave link in the first direction, and the millimeter wave capabilities field of the millimeter wave association response indicates that the AP supports separate establishment of the millimeter wave link in the first direction.

3. The method according to claim 1 or 2, wherein the millimeter wave link in the first direction is an uplink millimeter wave link or a downlink millimeter wave link.

4. The method according to claim 3, wherein when the millimeter wave link in the first direction is an uplink millimeter wave link, the method further comprises:
receiving, by the AP, an uplink data frame from the STA via the uplink millimeter wave link; and
sending, by the AP, a downlink data frame to the STA via the sub-6G link.

5. The method according to claim 3, wherein when the millimeter wave link in the first direction is a downlink millimeter wave link, the method further comprises:
sending, by the AP, a downlink data frame to the STA via the downlink millimeter wave link; and
receiving, by the AP, an uplink data frame from the STA via the sub-6G link.

6. The method according to any one of claims 1 to 5, wherein the method further comprises:
transmitting, by the AP and the STA, a data frame via the millimeter wave link in the first direction, wherein the data frame comprises a first identifier, and the first identifier indicates that an acknowledgment ACK frame corresponding to the data frame is transmitted via the sub-6G link; and
transmitting, by the AP and the STA, the ACK frame corresponding to the data frame via the sub-6G link, wherein the ACK frame comprises a second identifier, and the second identifier indicates that the data frame corresponding to the ACK frame is transmitted via the millimeter wave link in the first direction.

7. The method according to any one of claims 1 to 6, wherein a millimeter wave option field of the millimeter wave association response carries a first millimeter wave channel, and the first millimeter wave channel is selected by the AP; and that the millimeter wave association response indicates to determine to establish the millimeter wave link in the first direction comprises:
the millimeter wave association response indicates to determine to establish the millimeter wave link in the first direction by using the first millimeter wave channel.

8. The method according to claim 7, wherein the millimeter wave link in the first direction is a downlink millimeter wave link; and the method further comprises:
sending, by the AP, a channel scan frame to the STA on a plurality of millimeter wave channels, wherein the channel scan frame is used to determine channel quality of the plurality of millimeter wave channels, and the plurality of millimeter wave channels comprise the first millimeter wave channel;
receiving, by the AP, a channel scan feedback frame from the STA via the sub-6G link, wherein the channel scan feedback frame indicates the channel quality of the plurality of millimeter wave channels;
determining, by the AP based on the channel quality of the plurality of millimeter wave channels, to switch a channel of the millimeter wave link in the first direction to a second millimeter wave channel, wherein channel quality of the second millimeter wave channel is better than that of the first millimeter wave channel; and
sending, by the AP, a channel switching frame to the STA via the sub-6G link, wherein the channel switching frame indicates the STA to switch the channel of the millimeter wave link in the first direction to the second millimeter wave channel.

9. The method according to claim 7, wherein the millimeter wave link in the first direction is a downlink millimeter wave link; and the method further comprises:
sending, by the AP, a channel scan frame to the STA on a plurality of millimeter wave channels, wherein the channel scan frame is used to determine quality of the plurality of millimeter wave channels, and the plurality of millimeter wave channels comprise the first millimeter wave channel;
receiving, by the AP, a channel scan feedback frame from the STA via the sub-6G link, wherein the channel scan feedback frame indicates that channel quality of a second millimeter wave channel of the plurality of millimeter wave channels is better than that of the first millimeter wave channel;
determining, by the AP based on the channel scan feedback frame, to switch a channel of the millimeter wave link in the first direction to the second millimeter wave channel; and
sending, by the AP, a channel switching frame to the STA via the sub-6G link, wherein the channel switching frame indicates the STA to switch the channel of the millimeter wave link in the first direction to the second millimeter wave channel.

10. The method according to claim 7, wherein the millimeter wave link in the first direction is an uplink millimeter wave link; and the method further comprises:
receiving, by the AP, a channel scan frame from the STA on a plurality of millimeter wave channels, wherein the channel scan frame is used to determine quality of the plurality of millimeter wave channels, and the plurality of millimeter wave channels comprise the first millimeter wave channel;
determining, by the AP, channel quality of the plurality of millimeter wave channels based on receiving statuses of the channel scan frame on the plurality of millimeter wave channels;
sending, by the AP, a channel scan feedback frame to the STA via the sub-6G link, wherein the channel scan feedback frame indicates the quality of the plurality of millimeter wave channels; and
receiving, by the AP, a channel switching frame from the STA via the sub-6G link, wherein the channel switching frame indicates the AP to switch a channel of the millimeter wave link in the first direction to a second millimeter wave channel, and channel quality of the second millimeter wave channel is better than that of the first millimeter wave channel.

11. The method according to claim 7, wherein the millimeter wave link in the first direction is an uplink millimeter wave link; and the method further comprises:
receiving, by the AP, a channel scan frame from the STA on a plurality of millimeter wave channels, wherein the channel scan frame is used to determine quality of the plurality of millimeter wave channels, and the plurality of millimeter wave channels comprise the first millimeter wave channel;
determining, by the AP, channel quality of the plurality of millimeter wave channels based on receiving statuses of the channel scan frame on the plurality of millimeter wave channels;
sending, by the AP, a channel scan feedback frame to the STA via the sub-6G link, wherein the channel scan feedback frame indicates that channel quality of a second millimeter wave channel of the plurality of millimeter wave channels is better than that of the first millimeter wave channel; and
receiving, by the AP, a channel switching frame from the STA via the sub-6G link, wherein the channel switching frame indicates the AP to switch the channel of the millimeter wave link in the first direction to the second millimeter wave channel.

12. The method according to claim 8 or 9, wherein the method further comprises:
sending, by the AP, a beam alignment request frame to the STA via the sub-6G link;
receiving, by the AP, a beam alignment response frame from the STA via the sub-6G link;
separately sending, by the AP, sector scan frames to the STA on a plurality of transmit sectors, wherein the sector scan frames are transmitted via the millimeter wave link in the first direction;
receiving, by the AP, a sector scan feedback frame from the STA via the sub-6G link, wherein the sector scan feedback frame indicates sector quality of the plurality of transmit sectors; and
determining, by the AP, an optimal transmit sector of the plurality of transmit sectors based on the sector quality of the plurality of transmit sectors.

13. The method according to claim 8 or 9, wherein the method further comprises:
sending, by the AP, a beam alignment request frame to the STA via the sub-6G link;
receiving, by the AP, a beam alignment response frame from the STA via the sub-6G link;
separately sending, by the AP, sector scan frames to the STA on a plurality of transmit sectors, wherein the sector scan frames are transmitted via the millimeter wave link in the first direction; and
receiving, by the AP, a sector scan feedback frame from the STA via the sub-6G link, wherein the sector scan feedback frame indicates an optimal transmit sector of the plurality of transmit sectors.

14. The method according to claim 10 or 11, wherein the method further comprises:
receiving, by the AP, a beam alignment request frame from the STA via the sub-6G link;
sending, by the AP, a beam alignment response frame to the STA via the sub-6G link;
separately receiving, by the AP on a plurality of receive sectors, sector scan frames sent by the STA from a same transmit sector, wherein the sector scan frames are transmitted via the millimeter wave link in the first direction; and
determining, by the AP, an optimal receive sector of the plurality of receive sectors based on receiving statuses of receiving the sector scan frames on the plurality of receive sectors.

15. A millimeter wave link establishment method, wherein the method comprises:
establishing, by a user station STA and an access point AP, a sub-6G link;
sending, by the STA, a millimeter wave association request to the AP via the sub-6G link, wherein the millimeter wave association request is used to request to establish a millimeter wave link in a first direction;
receiving, by the STA via the sub-6G link, a millimeter wave association response sent by the AP, wherein the millimeter wave association response indicates to determine to establish the millimeter wave link in the first direction; and
establishing, by the STA and the AP, the millimeter wave link in the first direction.

16. The method according to claim 15, wherein a millimeter wave capabilities field of the millimeter wave association request carries capability information about whether the STA supports separate establishment of the millimeter wave link in the first direction, and a millimeter wave capabilities field of the millimeter wave association response carries capability information about whether the AP supports separate establishment of the millimeter wave link in the first direction; and
establishing, by the AP and the STA, the millimeter wave link in the first direction comprises:
establishing, by the AP and the STA, the millimeter wave link in the first direction when the millimeter wave capabilities field of the millimeter wave association request indicates that the STA supports separate establishment of the millimeter wave link in the first direction, and the millimeter wave capabilities field of the millimeter wave association response indicates that the AP supports separate establishment of the millimeter wave link in the first direction.

17. The method according to claim 15 or 16, wherein the millimeter wave link in the first direction is an uplink millimeter wave link or a downlink millimeter wave link.

18. The method according to claim 17, wherein when the millimeter wave link in the first direction is an uplink millimeter wave link, the method further comprises:
sending, by the STA, an uplink data frame to the AP via the uplink millimeter wave link; and
receiving, by the STA, a downlink data frame from the AP via the sub-6G link.

19. The method according to claim 17, wherein when the millimeter wave link in the first direction is a downlink millimeter wave link, the method further comprises:
receiving, by the STA, a downlink data frame from the AP via the downlink millimeter wave link; and
sending, by the STA, an uplink data frame to the AP via the sub-6G link.

20. The method according to any one of claims 15 to 19, wherein the method further comprises:
transmitting, by the STA and the AP, a data frame via the millimeter wave link in the first direction, wherein the data frame comprises a first identifier, and the first identifier indicates that an acknowledgment ACK frame corresponding to the data frame is transmitted via the sub-6G link; and
transmitting, by the STA and the AP, the ACK frame corresponding to the data frame via the sub-6G link, wherein the ACK frame comprises a second identifier, and the second identifier indicates that the data frame corresponding to the ACK frame is transmitted via the millimeter wave link in the first direction.

21. The method according to any one of claims 15 to 20, wherein a millimeter wave option field of the millimeter wave association response carries a first millimeter wave channel, and the first millimeter wave channel is selected by the AP; and that the millimeter wave association response indicates to determine to establish the millimeter wave link in the first direction comprises:
the millimeter wave association response indicates to determine to establish the millimeter wave link in the first direction by using the first millimeter wave channel.

22. The method according to claim 21, wherein the millimeter wave link in the first direction is a downlink millimeter wave link; and the method further comprises:
receiving, by the STA, a channel scan frame from the AP on a plurality of millimeter wave channels, wherein the channel scan frame is used to determine channel quality of the plurality of millimeter wave channels, and the plurality of millimeter wave channels comprise the first millimeter wave channel;
determining, by the STA, channel quality of the plurality of millimeter wave channels based on receiving statuses of the channel scan frame on the plurality of millimeter wave channels;
sending, by the STA, a channel scan feedback frame to the AP via the sub-6G link, wherein the channel scan feedback frame indicates the channel quality of the plurality of millimeter wave channels; and
receiving, by the STA, a channel switching frame from the AP via the sub-6G link, wherein the channel switching frame indicates the STA to switch the channel of the millimeter wave link in the first direction to the second millimeter wave channel.

23. The method according to claim 21, wherein the millimeter wave link in the first direction is a downlink millimeter wave link; and the method further comprises:
receiving, by the STA, a channel scan frame from the AP on a plurality of millimeter wave channels, wherein the channel scan frame is used to determine quality of the plurality of millimeter wave channels, and the plurality of millimeter wave channels comprise the first millimeter wave channel;
determining, by the STA, channel quality of the plurality of millimeter wave channels based on receiving statuses of the channel scan frame on the plurality of millimeter wave channels;
sending, by the STA, a channel scan feedback frame to the AP via the sub-6G link, wherein the channel scan feedback frame indicates that channel quality of a second millimeter wave channel of the plurality of millimeter wave channels is better than that of the first millimeter wave channel; and
receiving, by the STA, a channel switching frame from the AP via the sub-6G link, wherein the channel switching frame indicates the STA to switch the channel of the millimeter wave link in the first direction to the second millimeter wave channel.

24. The method according to claim 21, wherein the millimeter wave link in the first direction is an uplink millimeter wave link; and the method further comprises:
sending, by the STA, a channel scan frame to the AP on a plurality of millimeter wave channels, wherein the channel scan frame is used to determine quality of the plurality of millimeter wave channels, and the plurality of millimeter wave channels comprise the first millimeter wave channel;
receiving, by the STA, a channel scan feedback frame from the AP via the sub-6G link, wherein the channel scan feedback frame indicates the quality of the plurality of millimeter wave channels;
determining, by the STA based on the quality of the plurality of millimeter wave channels, to switch a channel of the millimeter wave link in the first direction to a second millimeter wave channel, wherein channel quality of the second millimeter wave channel is better than that of the first millimeter wave channel; and
sending, by the STA, a channel switching frame to the AP via the sub-6G link, wherein the channel switching frame indicates the AP to switch the channel of the millimeter wave link in the first direction to the second millimeter wave channel.

25. A communication apparatus, wherein the communication apparatus comprises a processor and a memory, wherein
the memory is configured to store program instructions, and when the processor executes the program instructions, the communication apparatus is enabled to perform the millimeter wave link establishment method according to any one of claims 1 to 14 or claims 15 to 24.

26. A computer-readable storage medium, comprising instructions, wherein when the instructions are run on a computer, the computer is enabled to perform the millimeter wave link establishment method according to any one of claims 1 to 14 or claims 15 to 24.
